(19) Europäisches Patentamt
European Patent Office
Office européen des brevets

(11) **EP 2 500 750 B1**

(12) **FASCICULE DE BREVET EUROPEEN**

(45) Date de publication et mention de la délivrance du brevet:
**22.11.2017 Bulletin 2017/47**

(51) Int Cl.:
***G01S 19/23*** *(2010.01)*    ***G01S 19/53*** *(2010.01)*

(21) Numéro de dépôt: **12159763.7**

(22) Date de dépôt: **15.03.2012**

(54) **Procédé et dispositif pour la calibration d'un récepteur.**

Verfahren und Vorrichtung zur Eichung eines Empfängers

Method and device for calibrating a receiver.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2011 FR 1100806**

(43) Date de publication de la demande:
**19.09.2012 Bulletin 2012/38**

(73) Titulaire: **Thales**
**92400 Courbevoie (FR)**

(72) Inventeurs:
• **Martin, Nicolas**
**26500 BOURG LES VALENCE (FR)**

• **Perre, Jean-Michel**
**07130 ST PERAY (FR)**
• **Chopard, Vincent**
**07300 Tournon sur Rhone (FR)**

(74) Mandataire: **Brunelli, Gérald et al**
**Marks & Clerk France**
**Immeuble Visium**
**22, avenue Aristide Briand**
**94117 Arcueil Cedex (FR)**

(56) Documents cités:
**WO-A1-98/29754    US-A- 5 446 465**
**US-A- 5 561 432    US-A- 6 163 754**

**Description**

L'invention concerne la radionavigation à partir de sources émettant des signaux en particulier des satellites et plus particulièrement la calibration d'antenne.

La radionavigation par satellite permet d'obtenir la position d'un récepteur par une résolution voisine de la triangulation, en utilisant les pseudo-distances mesurées à partir de signaux envoyés par des satellites.

Pour recevoir des signaux provenant des satellites on peut utiliser par exemple un récepteur muni d'une antenne CRPA (pour Controlled Radiation Pattern Antenna).

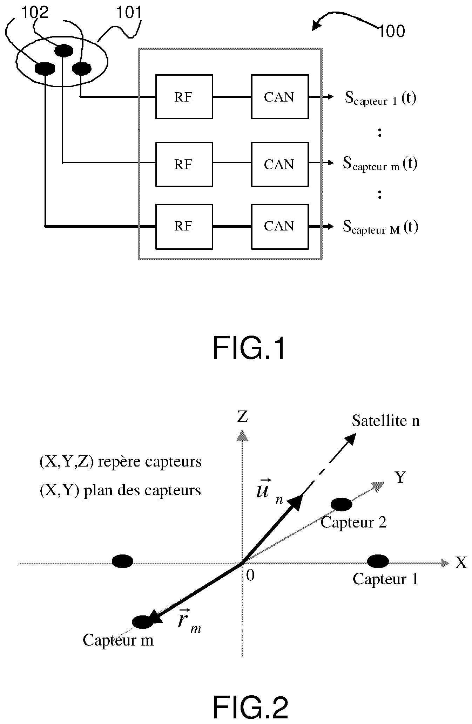

La figure 1 représente l'étage d'entrée d'un récepteur de signaux satellites 100 selon l'art connu. Classiquement un récepteur 100 muni d'une antenne 101 CRPA comprend :

- une antenne 101 comprenant une pluralité de capteurs 102,
- pour chaque capteur 102, une voie analogique pour filtrer, amplifier, convertir en fréquence intermédiaire et numériser des signaux provenant du capteur, (bloc RF pour Radio-Fréquence et CAN pour convertisseur Analogique Numérique fournissant un signal numérisé $S_{capteur}$, M représentant le nombre de capteurs de l'antenne),
- un traitement numérique d'antenne commun à tous les capteurs (non représenté dans la figure 1), qui effectue un filtrage et une combinaison des signaux capteurs numérisés, qui peut être propre à chaque direction satellite,
- pour chaque signal satellite, un traitement numérique du signal (non représenté dans la figure 1) qui effectue la démodulation (démodulation de la porteuse et du Doppler et désétalement par corrélation avec un code local) du signal résultant du traitement numérique d'antenne.

Pour améliorer les performances d'une antenne CRPA, il est connu de mettre en oeuvre différentes méthodes de traitement d'antenne. Certaines de ces méthodes ont besoin des données suivantes :

(i) la direction des satellites en repère antenne (ou repère capteurs), et
(ii) des biais de déphasages $\beta_{capteur}$ induits par les voies analogiques entre le centre de phase de chaque capteur et les convertisseurs analogiques numériques.

La direction des satellites est connue parfaitement en repère TGL (Trièdre Géographique Local, repère Nord, Est, Vertical centré sur la position du récepteur) grâce à des éphémérides ou des almanachs. Pour en déduire la direction en repère capteurs, il faut connaître l'attitude de l'antenne par rapport au TGL. L'attitude est l'orientation de l'antenne par rapport aux trois axes d'un repère de référence, en l'occurrence le repère TGL.

L'attitude de l'antenne est traditionnellement donnée par une référence inertielle d'attitude et de cap (AHRS - Attitude and Heading Reference System) hybridée avec d'autres capteurs (anémométrie, GPS, radar Doppler, etc) ou par une référence inertielle autonome (IRS - Inertial Reference System).

Il est aussi possible de déterminer l'attitude de l'antenne grâce aux signaux satellites eux mêmes, qui arrivent avec des déphasages différents sur les capteurs, en fonction de la direction incidente .

Dans tous les cas, l'attitude de l'antenne, fournie par une référence inertielle ou identifiée grâce aux signaux satellites, permet de déterminer la direction des satellites en repère antenne.

Comme on l'a indiqué plus haut, certaines méthodes de traitement du signal nécessitent aussi la connaissance des biais des capteurs $\beta_{capteur}$.

On connaît des méthodes pour identifier les biais des capteurs en usine. Mais cela augmente le coût de production de l'équipement (moyens de calibration et temps passé) et ne permet pas de compenser le vieillissement des capteurs qui induit une variabilité du biais.

Il est aussi possible de doter l'électronique d'antenne d'un dispositif d'autocalibration en vol avec son propre signal de calibration, mais cela ne permet pas d'inclure le biais dû au capteur seul (le signal de calibration étant introduit entre l'antenne et les chaînes de réception analogiques, la calibration ne peut donc pas déterminer les défauts au niveau des capteurs de l'antenne) et augmente le coût de l'équipement à cause du matériel supplémentaire.

Il est connu des systèmes comme ceux présentés dans le brevet US 5.446.465, utilisant des doubles différences des mesures de phases ce qui permettant d'éliminer complètement les biais des capteurs d'antenne, en particulier la partie (prépondérante) indépendante des directions satellites (donc commune à toutes les mesures satellites). Ainsi dans ce cas la recherche du minimum du critère de minimisation de la moyenne quadratique appliqué sur les écart entre les doubles différences mesurées et les doubles différences théoriques, doit conduire à zéro pour la bonne hypothèse d'attitude, Dans ces systèmes les biais sont traités comme des effets parasites qu'on cherche à ignorer.

L'invention vise à pallier les problèmes cités précédemment en proposant un procédé et un dispositif pour la calibration de l'antenne d'un récepteur de signaux provenant d'une pluralité de satellites permettant la détermination des biais des capteurs d'une antenne d'un récepteur de radionavigation. Les biais déterminés prennent en compte le vieillissement des capteurs.

A cet effet, l'invention a pour objet un procédé pour la calibration d'une antenne d'un récepteur de signaux ($s_1$, ..., $s_N$) provenant d'une pluralité de sources, ledit récepteur comportant une pluralité de capteurs ($c_1$, ..., $c_M$), caractérisé en ce qu'il comporte les étapes suivantes :

- la mesure (401) d'un déphasage ($d_{m,n\ mesuré}$) pour chacun des capteurs ($c_1$, ..., $c_M$) sur chacun des signaux ($s_1$, ..., $s_N$),
- la détermination (402) d'au moins une valeur d'attitude de l'antenne, ladite attitude étant définie par un jeu de coordonnées,
- le calcul (403), pour chacun des capteurs sur chacun des signaux, d'un déphasage théorique ($d_{m,n\ théorique}$) en fonction de l'attitude de l'antenne, à partir des directions d'arrivée des signaux,
- le calcul (404) d'un biais ($\beta_{1\ capteur\ m}$) pour chacun des capteurs à partir des déphasages mesurés ($d_{m,n\ mesuré}$) et des déphasages théoriques ($d_{m,n\ théorique}$) du capteur.

L'invention permet de déterminer de façon précise le biais des capteurs d'un récepteur de signaux. Ceci permet d'améliorer les performances des traitements du signal effectué en aval de ce récepteur. A titre d'exemple, on peut citer la formation de faisceaux (ou beam forming).

Le procédé selon l'invention peut s'appliquer lorsque le récepteur est embarquée à bord d'un mobile (terrestre ou aérien). Typiquement, il est possible de déterminer les biais des capteurs au cours d'un vol lorsque le mobile embarquant le récepteur est un aéronef. Ceci permet de s'affranchir d'une calibration en usine qui nécessite des moyens lourds et qui peut donc s'avérer couteuse. En outre, le biais des capteurs peut évoluer au cours du temps. La calibration en usine peut donc devenir obsolète. La calibration en vol peut être répété périodiquement et la valeurs des biais des capteurs peuvent être maintenues à jour au cours du temps.

L'invention permet donc d'utiliser les déphasages mesurés entre les capteurs n °2, 3, .. et un capteur n °1, assimilables à des simples différences. L'invention permet donc d'estimer ces biais afin d'améliorer par exemple un traitement d'antenne.

Selon une variante de l'invention, l'étape de détermination (402) d'au moins une valeur d'attitude de l'antenne comprend la détermination d'une unique valeur déterminée par des moyens de mesure adaptés.

Avantageusement, le calcul (404) d'un biais ($\beta_{1\ capteur\ m}$) pour chacun des capteurs à partir des déphasages mesurés ($d_{m,n\ mesuré}$) et des déphasages théoriques ($d_{m,n\ théorique}$) du capteur est réalisé en suivant une méthode des moindres carrés.

Selon une variante de l'invention, le procédé comporte en outre les étapes suivantes :

- lequel l'étape de détermination (402) d'au moins une valeur d'attitude de l'antenne comprend la détermination d'une pluralité d'hypothèses d'attitude de l'antenne,
- pour chaque hypothèse d'attitude déterminée,

   o le calcul (404) d'un biais ($\beta_{1\ capteur\ m}$) pour chacun des capteurs à partir des déphasages mesurés ($d_{m,n\ mesuré}$) et des déphasages théoriques ($d_{m,n\ théorique}$) du capteur,
   o le calcul (405) d'un indicateur de vraisemblance ($\Phi$) de l'hypothèse d'attitude, à partir des déphasages mesurés ($d_{m,n\ mesuré}$), des déphasages théoriques ($d_{m,n\ théorique}$) et des biais calculés ($\beta_{1\ capteur\ m}$),

- la sélection (406) des biais pour lesquels la valeur de l'indicateur de vraisemblance est la plus faible.

Avantageusement, le calcul (403), pour chacun des capteurs sur chacun des signaux, d'un déphasage théorique ($d_{m,n\ théorique}$) prend aussi en compte des valeurs prédéterminées des biais capteurs ($\beta_{0\ capteur\ m}$) liées à des défauts du récepteur et dépendant de la direction d'arrivée des signaux sources, la calibration visant à identifier des biais capteurs résiduels ($\beta_{1\ capteur\ m}$) indépendants de la direction d'arrivée des signaux.

Avantageusement,, les coordonnées définissant l'attitude de l'antenne étant un cap ($\psi$), une assiette ($\theta$) et une inclinaison ($\varphi$), le calcul de l'indicateur de vraisemblance ($\Phi$) comprend le calcul d'un résidu pour chaque couple signal capteur, le résidu pour un capteur et un signal donnés suivant la relation :

$$\rho_{m,n}(\psi,\theta,\varphi) = d_{m,n\ mesuré} - d_{m,n\ théorique}(\psi,\theta,\varphi) - \tilde{\beta}_{1\ capteur\ m}(\psi,\theta,\varphi),$$

Avec $\rho_{m,n}(\psi,\theta,\varphi)$ le résidu associé au couple signal n et capteur m, $d_{m,n\ mesuré}$ le déphasage mesuré pour le capteur m pour le signal n, $d_{m,n\ théorique}(\psi,\theta,\varphi)$ le déphasage théorique pour le capteur m pour le signal n et pour le cap $\psi$, l'assiette $\theta$ et l'inclinaison $\varphi$, $\tilde{\beta}_{1\ capteur\ m}(\psi,\theta,\varphi)$ une valeur estimée du biais du capteur m pour le cap $\psi$, l'assiette $\theta$ et l'inclinaison $\varphi$.

et en ce que l'indicateur de vraisemblance est une somme pondérée des carrés des résidus suivant la relation suivante :

$$\Phi(\psi,\theta,\varphi) = \sum_{m=2}^{M} \sum_{n=1}^{N} w(\sigma_n, \alpha_n) . \left| \rho_{m,n}(\psi,\theta,\varphi) \right|^2$$

Avec $\Phi(\psi,\theta,\varphi)$ l'indicateur de vraisemblance pour le cap $\psi$, l'assiette $\theta$ et l'inclinaison $\varphi$, $\rho_{m,n}(\psi,\theta,\varphi)$ le résidu associé au couple signal n et capteur m et $w(\sigma_n, \alpha_n)$ une pondération de la source n, dépendant de $\sigma_n$ l'angle de site en repère capteur et de $\alpha_n$ l'angle d'azimut en repère capteur.

Avantageusement, le calcul (404) d'un biais $\beta_{1\ capteur\ m}$ pour chacun des capteurs à partir des déphasages mesurés ($d_{m,n\ mesuré}$) et des déphasages théoriques ($d_{m,n\ théorique}$) du capteur est réalisé en suivant une méthode des moindres carrés pondérés.

Avantageusement, le biais des capteurs étant indépendant de la direction d'arrivée des signaux, le calcul (404) d'un biais $\beta_{1\ capteur\ m}$ pour chacun des capteurs à partir des déphasages mesurés ($d_{m,n\ mesure}$) et des déphasages théoriques ($d_{m,n\ théorique}$) du capteur est réalisé selon une moyenne pondérée.

$$\tilde{\beta}_{1\ capteur\ m}(\psi,\theta,\varphi) = \frac{1}{N} \sum_{n=1}^{N} w(\sigma_n, \alpha_n) . \left( d_{m,n\ mesuré} - d_{m,n\ théorique}(\psi,\theta,\varphi) \right)$$

Avec $\tilde{\beta}_{1\ capteur\ m}(\psi,\theta,\varphi)$ le biais d'un capteur m, pour le cap $\psi$, l'assiette $\theta$ et l'inclinaison $\varphi$ et $w(\sigma_n, \alpha_n)$ une pondération de la source n, dépendant de $\sigma_n$ l'angle de site en repère capteur et de $\alpha_n$ l'angle d'azimut en repère capteur.

Avantageusement,, la calibration visant à identifier des biais résiduels ($\beta_{1\ capteur\ m}$) dépendants de la direction d'arrivée des signaux, les biais des capteurs sont exprimés par des combinaisons linéaires, comportant des coefficients, de fonctions des directions d'arrivée des signaux en repère antenne.

Avantageusement, les coefficients des combinaisons linéaires sont déterminés au moyen d'une méthodes des moindres carrés pondérés.

Avantageusement, les coordonnées définissant l'attitude de l'antenne étant un cap ($\psi$), une assiette ($\theta$) et une inclinaison ($\varphi$), le calcul de l'indicateur de vraisemblance ($\Phi$) suit la relation suivante :

$$\Phi(\psi,\theta,\varphi) = \sum_{m=2}^{M} \left\| W^{1/2} (H_m \hat{X}_m - Z_m) \right\|^2 = \sum_{m=2}^{M} (H_m \hat{X}_m - Z_m)^T W (H_m \hat{X}_m - Z_m)$$

Avec $\Phi(\psi,\theta,\varphi)$ l'indicateur de vraisemblance pour le cap $\psi$, l'assiette $\theta$ et l'inclinaison $\varphi$ et W une matrice de pondération diagonale, H une matrice des fonctions des directions d'arrivée des signaux en repère antenne, X une matrice de coefficients et Z étant défini comme suit :

$$Z_m = \begin{bmatrix} d_{m,1\ mesuré} - d_{m,1\ théorique}(\psi,\theta,\varphi) \\ \vdots \\ d_{m,n\ mesuré} - d_{m,n\ théorique}(\psi,\theta,\varphi) \\ \vdots \\ d_{m,N\ mesuré} - d_{m,N\ théorique}(\psi,\theta,\varphi) \end{bmatrix}_{Nx1} .$$

Avantageusement,, les étapes de détermination d'une hypothèse d'attitude de l'antenne et de calcul de biais sont réalisées façon itérative et comprennent des étapes de :

- initialisation (501) d'une hypothèse dite précédente ($\psi_{n-1}$, $\theta_{n-1}$, $\varphi_{n-1}$),
- calcul (502) d'une hypothèse courante ($\psi_n$, $\theta_n$, $\varphi_n$) à partir de l'hypothèse précédente ($\psi_{n-1}$, $\theta_{n-1}$, $\varphi_{n-1}$),
- calcul des sommes des résidus au carré (503) à partir de l'hypothèse courante ($\psi_n$, $\theta_n$, $\varphi_n$),
- calcul (504) d'un gradient à partir des sommes des résidus au carré,
- comparaison (505) du gradient avec un seuil prédéterminé (S), si le gradient est inférieur au seuil (S) alors la calibration est terminé (506), sinon le retour à l'étape de calcul (502) d'une hypothèse courante avec l'hypothèse courante comme hypothèse précédente.

Selon un mode de réalisation de l'invention, le calcul (502) d'une hypothèse courante à partir d'une hypothèse précédente suit la relation suivante :

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \Phi(\psi_n,\theta_n,\varphi_n). \frac{\vec{G}rad\Phi(\psi_n,\theta_n,\varphi_n)}{\left\| \vec{G}rad\Phi(\psi_n,\theta_n,\varphi_n) \right\|^2}$$

Avec

$$\vec{G}rad\Phi(\psi,\theta,\varphi) \overset{def}{=} \begin{bmatrix} \dfrac{\partial\Phi}{\partial\psi}(\psi,\theta,\varphi) \\ \dfrac{\partial\Phi}{\partial\theta}(\psi,\theta,\varphi) \\ \dfrac{\partial\Phi}{\partial\varphi}(\psi,\theta,\varphi) \end{bmatrix}$$

Avec $\vec{G}rad\Phi$ le gradient de l'indicateur de vraisemblance fonction de $\psi$ le cap, $\theta$ l'assiette et $\varphi$ l'inclinaison.

Selon un autre mode de réalisation de l'invention, le calcul d'une hypothèse courante à partir d'une hypothèse précédente suit la relation suivante :

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \alpha . \vec{G}rad\Phi(\psi_n,\theta_n,\varphi_n)$$

Avec $\alpha$ un coefficient de recalage dont la valeur est choisie entre 0 et 1, de manière fixe ou évolutive.

L'invention concerne aussi un récepteur de signaux sources comportant une pluralité de capteurs répartis sur une antenne, des moyens pour numériser les signaux provenant desdits capteurs, un dispositif de traitement du signal (701) adaptés pour le traitement du signal comportant :

- un premier module (601) adapté au calcul de signaux corrélés ($Z_1$ , ..., $Z_M$) à partir des signaux reçus par les capteurs ($c_1$ , ... , $c_M$) et correspondant à ladite source ($s_n$), lesdits signaux corrélés ($Z_1$ , ..., $Z_M$), résultant de la corrélation des signaux reçus respectivement sur les capteurs ($c_1$,... , $c_M$) par un signal local constitué par une porteuse complexe et un code d'étalement propre à la source ($S_n$) correspondante,
- un deuxième module (602) adapté à la détermination des mesures de déphasage ($d_{m,n\ mesuré}$) pour chacun des capteurs ($c_1$,..., $c_M$) sur le signal provenant de ladite source ($s_n$), à partir des signaux corrélés ($Z_1$ , ..., $Z_M$).

et des moyens de mise en oeuvre du procédé (702) selon les caractéristiques techniques présentées précédemment.

L'invention sera mieux comprise et d'autres avantages apparaîtront à la lecture de la description détaillée faite à titre d'exemple non limitatif et à l'aide des figures parmi lesquelles :

La figure 1, déjà présentée, représente un récepteur de signaux satellites selon l'art connu.
La figure 2 représente un vecteur de distance antenne-satellite en repère capteur.
La figure 3 illustre des coordonnées définissant l'attitude de l'antenne dans un repère TGL.

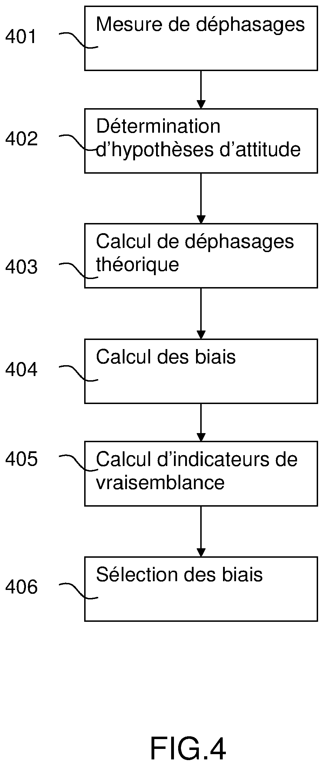

La figure 4 montre un diagramme illustrant le procédé selon l'invention.

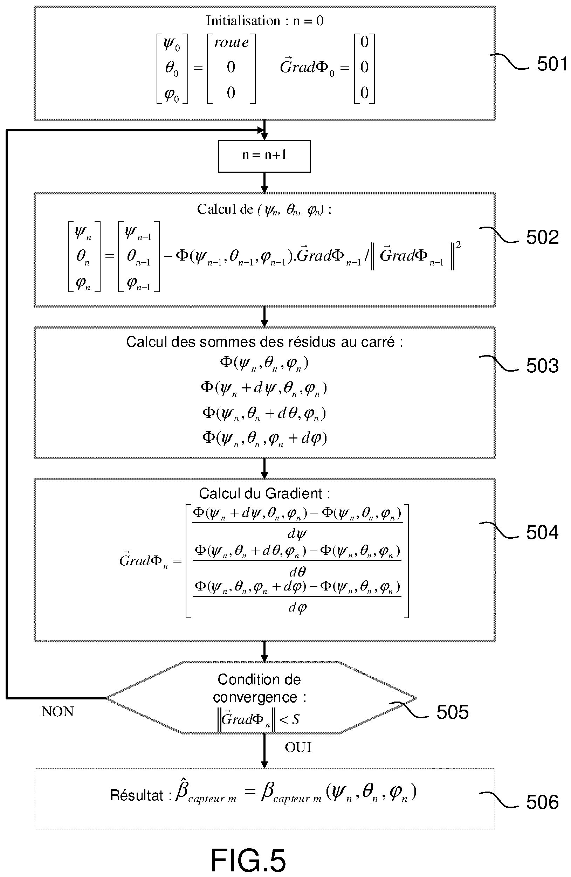

La figure 5 montre un diagramme illustrant une variante de réalisation du procédé selon l'invention.
La figure 6 montre un exemple de réalisation d'un dispositif selon l'invention.
La figure 7 montre un exemple de réalisation d'un récepteur selon l'invention.

L'invention est décrite ci-après, à titre d'exemple non limitatif, au travers d'un mode de réalisation dans lequel les sources des signaux sont des satellites. De façon alternatives, les sources de signaux peuvent être des pseudolites, c'est-à-dire des émetteurs terrestres situés au sol ou embarqués à bord de mobiles.

Sur la figure 2, on peut distinguer une pluralité de capteurs (Capteur 1, Capteur 2, Capteur m, ...) représentés par des points noirs. La figure représente aussi un repère, appelé repère capteurs, comportant trois axes X, Y et Z. Les capteurs sont tous situés dans le plan défini par les axes X et Y. On définit le vecteur directeur antenne - satellite n en repère capteurs $\vec{u}_n$ de la façon suivante :

$$\vec{u}_{n\ capteurs}(\psi,\theta,\varphi) = \begin{bmatrix} X_n \\ Y_n \\ Z_n \end{bmatrix} / \rho\ :$$

Où $\rho$ est la distance antenne - satellite n avec $\rho = \sqrt{X_n{}^2 + Y_n{}^2 + Z_n{}^2}$ $X_n$, $Y_n$, et $Z_n$ étant les coordonnées du satellite en repère capteur.

Le vecteur position du capteur m en repère capteurs $\vec{r}_m$ est connu sans erreur et est défini de la façon suivante :

$$\vec{r}_{m\ capteurs} = \begin{bmatrix} X_{capteur\ m} \\ Y_{capteur\ m} \\ Z_{capteur\ m} \end{bmatrix}$$

avec $X_{capteur\ m}$, $Y_{capteur\ m}$, et $Z_{capteur\ m}$ étant les coordonnées du capteur dans le repère capteur.

$$D_{n\ mesuré} = \begin{bmatrix} 0 \\ d_{2,n\ mesuré} \\ d_{m,n\ mesuré} \\ \vdots \\ d_{M,n\ mesuré} \end{bmatrix}_{M\,x\,1}\ :$$

Déphasages mesurés sur les M capteurs pour le satellite n

$d_{m,n\ mesuré}$ : Déphasages mesurés sur le capteur m par rapport au capteur 1, sur le signal du satellite n

L'invention concerne un procédé pour la calibration d'une antenne d'un récepteur de signaux ($s_1$, ..., $s_N$) provenant d'une pluralité de sources, ledit récepteur comportant une pluralité de capteurs ($c_1$,..., $c_M$), caractérisé en ce qu'il comporte les étapes suivantes :

- la mesure (401) d'un déphasage ($d_{m,n\ mesuré}$) pour chacun des capteurs ($c_1$, ..., $c_M$) sur chacun des signaux ($s_1$, ..., $s_N$),
- la détermination (402) d'au moins une valeur d'attitude de l'antenne, ladite attitude étant définie par un jeu de coordonnées,
- le calcul (403), pour chacun des capteurs sur chacun des signaux, d'un déphasage théorique ($d_{m,n\ théorique}$) en fonction de l'attitude de l'antenne, à partir des directions d'arrivée des signaux,
- le calcul (404) d'un biais ($\beta1$ capteur m) pour chacun des capteurs à partir des déphasages mesurés (dm,n mesuré) et des déphasages théoriques (dm,n théorique) du capteur.

Selon une variante de réalisation de l'invention, l'attitude de l'antenne peut être déterminée de façon trivial à l'aide de moyens de mesure adaptés. C'est le cas notamment lorsque l'antenne est fixe ou lorsque l'on dispose d'une centrale inertielle déterminant l'attitude de l'antenne.

Dans cette variante de réalisation de l'invention, le calcul 404 d'un biais $\beta_{1\ capteur\ m}$ pour chacun des capteurs à partir des déphasages mesurés $d_{m,n}$ mesuré et des déphasages théoriques $d_{m,n\ théorique}$ du capteur peut être réalisé en suivant une méthode des moindres carrés.

Dans la suite de la description, on suppose que l'attitude de l'antenne n'est pas connue. Dans cette autre variante de réalisation de l'invention, l'attitude de l'antenne n'est pas connu a priori. Elle est déterminée à l'aide des signaux. Le procédé pour la calibration d'une antenne d'un récepteur comporte en outre les étapes suivantes :

- lequel l'étape de détermination (402) d'au moins une valeur d'attitude de l'antenne comprend la détermination (402) d'une pluralité d'hypothèses d'attitude de l'antenne, ladite attitude étant définie par un jeu de coordonnées,
- pour chaque hypothèse d'attitude déterminée,

  o le calcul (404) d'un biais ($\beta_{1\ capteur\ m}$) pour chacun des capteurs à partir des déphasages mesurés ($d_{m,n\ mesuré}$) et des déphasages théoriques ($d_{m,n\ théorique}$) du capteur,
  o le calcul (405) d'un indicateur de vraisemblance ($\Phi$) de l'hypothèse d'attitude, à partir des déphasages mesurés ($d_{m,n\ mesuré}$), des déphasages théoriques ($d_{m,n\ théorique}$) et des biais calculés ($\beta_{1\ capteur\ m}$),

- la sélection (406) des biais pour lesquels la valeur de l'indicateur de vraisemblance est la plus faible.

Selon un premier mode de réalisation, les biais $\beta_{0\ capteur\ m}(\sigma,\ \alpha)$ sont prédéterminés, identifiés en usine et mémorisés dans le récepteur. La calibration vise alors à identifier des biais résiduel $\beta_{1\ capteur\ m}$ indépendants de la direction du satellite.

$$d_{1,n\ théorique}(\psi,\theta,\varphi) = 0$$

par définition

$$d_{m,n\ théorique}(\psi,\theta,\varphi) = 2\pi \cdot \vec{u}_{n\ capteurs}(\psi,\theta,\varphi) \cdot (\vec{r}_{m\ capteurs} - \vec{r}_{1\ capteurs}) / \lambda + \beta_{0\ capteur\ m}(\sigma_n,\alpha_n)$$

La direction d'arrivée du signal satellite n est représentée en repère capteur par le vecteur directeur $\vec{u}_{n\ capteurs}$ :

$$\vec{u}_{n\ capteurs} = \begin{bmatrix} \cos(\alpha_n).\cos(\sigma_n) \\ \sin(\alpha_n).\cos(\sigma_n) \\ \sin(\sigma_n) \end{bmatrix} = \begin{bmatrix} ux_n \\ uy_n \\ uz_n \end{bmatrix}$$

Avec $\sigma_n$ l'angle de site en repère capteur :

$$\sigma_n = \sin^{-1}(uz_n / \sqrt{ux_n^2 + uy_n^2}) = \sigma_n(\psi,\theta,\varphi)$$

Avec $\alpha_n$ l'angle d'azimut en repère capteur :

$$\alpha_n = \cos^{-1}(ux_n / uy_n) = \alpha_n(\psi,\theta,\varphi)$$

La tabulation de $\beta_{0\ capteur\ m}$ se fait en fonction des angles de site $\sigma$ et d'azimut $\alpha$.

On représente l'attitude de l'antenne par rapport au repère TGL grâce aux angles d'Euler : Cap($\psi$), Assiette ($\theta$) et Inclinaison ($\varphi$). Ces angles permettent de construire la matrice de changement de repère :

$$M(\psi,\theta,\varphi) = \begin{bmatrix} 1 & 0 & 0 \\ 0 & \cos\varphi & -\sin\varphi \\ 0 & \sin\varphi & \cos\varphi \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} \cos\psi & \sin\psi & 0 \\ -\sin\psi & \cos\psi & 0 \\ 0 & 0 & 1 \end{bmatrix}$$

$$\begin{bmatrix} X \\ Y \\ Z \end{bmatrix} = M(\psi,\theta,\varphi) \cdot \begin{bmatrix} X_{TGL} \\ Y_{TGL} \\ Z_{TGL} \end{bmatrix}$$

$$\vec{u}_{n\,capteurs}(\psi,\theta,\varphi) = M(\psi,\theta,\varphi) \cdot \vec{u}_{n\,TGL}$$

$$\vec{u}_{n\,TGL} = \begin{bmatrix} X_{n\,TGL} \\ Y_{n\,TGL} \\ Z_{n\,TGL} \end{bmatrix} / \rho \; : \text{Vecteur directeur antenne - satellite n en repère TGL}$$

$$\rho = \sqrt{X_n^2 + Y_n^2 + Z_n^2} = \sqrt{X_{n\,TGL}^2 + Y_{n\,TGL}^2 + Z_{n\,TGL}^2} \; : \text{Distance antenne - satellite n}$$

$X_{nTGL}$, $Y_{nTGL}$, et $Z_{nTGL}$ étant les coordonnées du satellite en repère TGL. $\vec{u}_{nTGL}$ est connu sans erreur grâce à des éphémérides.

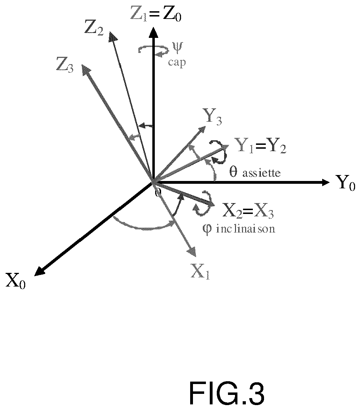

Sur la figure 3, on peut voir, les angles d'Euler ($\psi$, $\theta$, $\varphi$) représentant les angles de trois rotations successives faisant passer du repère d'origine (TGL) dans lesquelles les coordonnées sont (X0, Y0, Z0) au repère d'arrivée (Repère capteur) dans lesquelles les coordonnées sont (X3, Y3, Z3)

On note $\beta_{0\,capteur\,m}(\sigma,\alpha)$ le biais amont du capteur m dû à l'antenne et qui dépend de la direction d'arrivée du signal (aussi appelé biais directionnel). Le biais amont $\beta_{0\,capteur\,m}(\sigma,\alpha)$ est supposé constant dans le temps. Il peut être déterminé en usine.

On note $\beta_{1\,capteur\,m}$ le biais du capteur m dû aux voies analogiques entre la sortie de l'antenne et le CAN. Le biais $\beta_{1\,capteur\,m}$ est constant par rapport à la direction d'arrivée du signal.

Le biais $\beta_{1\,capteur\,m}$ est variable dans le temps (notamment à cause de la température et du vieillissement du capteur). Il nécessite donc une calibration en vol.

Selon une caractéristique de l'invention, le calcul (404) d'un biais ($\beta$) pour chacun des capteurs à partir des déphasages mesurés ($d_{m,n\,mesuré}$) et des déphasages théoriques ($d_{m,n\,théorique}$) du capteur est réalisé en suivant une méthode des moindres carrées pondérés.

Dans ce premier mode de réalisation, on pose le système d'équation suivant, exact aux bruits de mesure près :

$$\begin{cases} d_{2,n\,mesuré} = d_{2,n\,théorique}(\psi,\theta,\varphi) + \beta_{1\,capteur\,2} & \text{pour n = 1,2, .. N} \\ \quad\vdots \\ d_{m,n\,mesuré} = d_{m,n\,théorique}(\psi,\theta,\varphi) + \beta_{1\,capteur\,m} & \text{pour n = 1,2, .. N} \\ \quad\vdots \\ d_{M,n\,mesuré} = d_{M,n\,théorique}(\psi,\theta,\varphi) + \beta_{1\,capteur\,M} & \text{pour n = 1,2, .. N} \end{cases}$$

On a N x (M-1) équations où N est le nombre de satellites et M le nombre de capteurs. On a 3 + (M-1) inconnues : $\psi$, $\theta$, $\varphi$ et $\beta_{1\,capteur\,2}$, ... $\beta_{1capteur\,n}$. Il faut au moins N x (M-1) $\geq$ 3 + (M-1) soit (N-1) x (M-1) $\geq$ 3 pour avoir une solution déterminée.

Si on a exactement (N-1) x (M-1) = 3 on trouve une solution au système quelles que soient les valeurs des bruits, mais sans bénéficier d'une redondance des mesures, donc très sensible au bruit.

Au delà il n'y a pas de solution « exacte » au système à cause des bruits de mesure qui rendent les mesures incohérentes (et éventuellement des variations mal calibrées des biais capteur $\beta_{0\,capteur\,m}(\sigma, \alpha)$ en fonction de la direction d'arrivée des signaux dues au couplage des capteurs). Par contre il existe une solution approchée, par exemple celle qui minimise la sommes des carrés des résidus, qui bénéficiera de la redondance des mesures pour moyenner les bruits.

Le système à résoudre n'est pas linéaire à cause des fonctions trigonométriques qui relient les angles d'Euler aux déphasages théoriques $d_{m,n\,théorique}(\psi,\theta,\varphi)$. On ne peut donc pas utiliser la méthode de résolution linéaire minimisant la sommes des carré des résidus, appelée méthodes des « moindres carrés » ou « régression linéaire ».

On utilise une méthode de recherche itérative dans le domaine à trois dimensions $(\psi, \theta, \varphi)$ : Pour chaque triplet de valeurs considérées des angles d'Euler on résout un nouveau système à (M-1) inconnues et N x (M-1) équations (on considère les 3 inconnues $\psi$, $\theta$, $\varphi$ comme des constantes) qui est linéaire :

$$\begin{cases} d_{2,n\,mesur\acute{e}} - d_{2,n\,th\acute{e}orique}(\psi, \theta, \varphi) = \beta_{1\,capteur\,2} & \text{pour } n = 1, 2, .. N \\ \quad \vdots \\ d_{m,n\,mesur\acute{e}} - d_{m,n\,th\acute{e}orique}(\psi, \theta, \varphi) = \beta_{1\,capteur\,m} & \text{pour } n = 1, 2, .. N \\ \quad \vdots \\ d_{M,n\,mesur\acute{e}} - d_{M,n\,th\acute{e}orique}(\psi, \theta, \varphi) = \beta_{1\,capteur\,M} & \text{pour } n = 1, 2, .. N \end{cases}$$

Dans ce cas, la résolution au sens des moindres est simple, il suffit de prendre les moyennes des termes de gauche pour chaque capteur :

$$\begin{cases} \tilde{\beta}_{1\,capteur\,2}(\psi, \theta, \varphi) = \frac{1}{N} \sum_{n=1}^{N} \left( d_{2,n\,mesur\acute{e}} - d_{2,n\,th\acute{e}orique}(\psi, \theta, \varphi) \right) \\ \quad \vdots \\ \tilde{\beta}_{1\,capteur\,m}(\psi, \theta, \varphi) = \frac{1}{N} \sum_{n=1}^{N} \left( d_{m,n\,mesur\acute{e}} - d_{m,n\,th\acute{e}orique}(\psi, \theta, \varphi) \right) \\ \quad \vdots \\ \tilde{\beta}_{1\,capteur\,M}(\psi, \theta, \varphi) = \frac{1}{N} \sum_{n=1}^{N} \left( d_{M,n\,mesur\acute{e}} - d_{M,n\,th\acute{e}orique}(\psi, \theta, \varphi) \right) \end{cases}$$

Selon une caractéristique de l'invention, les coordonnés définissant l'attitude de l'antenne étant un cap $(\psi)$, une assiette $(\theta)$ et une inclinaison $(\varphi)$, le calcul (405) de l'indicateur de vraisemblance $(\Phi)$ comprend le calcul d'un résidu pour chaque couple signal capteur, le résidu pour un capteur et un signal donnés suivant la relation :

$$\rho_{m,n}(\psi, \theta, \varphi) = d_{m,n\,mesur\acute{e}} - d_{m,n\,th\acute{e}orique}(\psi, \theta, \varphi) - \tilde{\beta}_{1\,capteur\,m}(\psi, \theta, \varphi) ,$$

Avec $\rho_{m,n}(\psi, \theta, \varphi)$ le résidu associé au couple signal n et capteur m, $d_{m,n\,mesur\acute{e}}$ le déphasage mesuré pour le capteur m pour le signal n, $d_{m,n\,th\acute{e}orique}(\psi, \theta, \varphi)$ le déphasage théorique pour le capteur m pour le signal n et pour le cap $\psi$, l'assiette $\theta$ et l'inclinaison $\varphi$, $\beta_m(\psi, \theta, \varphi)$ le biais du capteur m pour le cap $\psi$, l'assiette $\theta$ et l'inclinaison $\varphi$.

Selon une première variante de réalisation de l'invention, l'indicateur de vraisemblance est la somme des carrés des résidus suivant la relation suivante :

$$\Phi(\psi, \theta, \varphi) = \sum_{m=2}^{M} \sum_{n=1}^{N} \left| \rho_{m,n}(\psi, \theta, \varphi) \right|^2$$

avec $\Phi(\psi, \theta, \varphi)$ l'indicateur de vraisemblance pour le cap $\psi$, l'assiette $\theta$ et l'inclinaison $\varphi$, $\rho_{m,n}(\psi, \theta, \varphi)$ le résidu associé au couple signal n et capteur m.

La somme des carrés des résidus est une bonne indication de la vraisemblance de l'hypothèse $(\psi, \theta, \varphi)$ considérée. Si les bruits $v_{m,n}$ sont nuls et si (N-1) x (M-1) > 3 alors $\Phi(\psi, \theta, \varphi)$ sera nulle, à condition que les valeurs des angles d'Euler considérées soient les bonnes.

Selon une deuxième variante de réalisation de l'invention, lorsque la calibration des biais antenne $\beta_{0\,capteur\,m}(\sigma, \alpha)$ n'est pas possible (par défaut on prend des valeurs nulles) ou imparfaite il peut être judicieux de pondérer les mesures de déphasage pour donner moins d'importances à celles correspondant à des satellites bas en repère antenne. En effet c'est à site bas que la calibration de l'antenne est la plus difficile à cause des fortes variations en fonction du site et de l'azimut.

$$\lceil \tilde{\beta}_{1\,capteur\,2}(\psi,\theta,\varphi) = \frac{1}{N}\sum_{n=1}^{N} w(\sigma_n,\alpha_n).\left(d_{2,n\,mesuré} - d_{2,n\,théorique}(\psi,\theta,\varphi)\right)$$

$$\mid \quad \vdots$$

$$\lbrace \tilde{\beta}_{1\,capteur\,m}(\psi,\theta,\varphi) = \frac{1}{N}\sum_{n=1}^{N} w(\sigma_n,\alpha_n).\left(d_{m,n\,mesuré} - d_{m,n\,théorique}(\psi,\theta,\varphi)\right)$$

$$\mid \quad \vdots$$

$$\lfloor \tilde{\beta}_{1\,capteur\,M}(\psi,\theta,\varphi) = \frac{1}{N}\sum_{n=1}^{N} w(\sigma_n,\alpha_n).\left(d_{M,n\,mesuré} - d_{M,n\,théorique}(\psi,\theta,\varphi)\right)$$

$$\Phi(\psi,\theta,\varphi) = \sum_{m=2}^{M}\sum_{n=1}^{N} w(\sigma_n,\alpha_n).\left|\rho_{m,n}(\psi,\theta,\varphi)\right|^{2}$$

Avec $w(\sigma_n, \alpha_n)$ une pondération du satellite n, dépendant de l'hypothèse d'attitude :

$$w(\sigma_n,\alpha_n) = w(\,\sigma_n(\psi,\theta,\varphi)\,,\,\alpha_n(\psi,\theta,\varphi)\,) = w_n(\psi,\theta,\varphi)$$

Il faut une somme normalisée à 1 :

$$w(\sigma_n,\alpha_n) = \frac{f(\sigma_n,\alpha_n)}{\displaystyle\sum_{n=1}^{N} f(\sigma_n,\alpha_n)} \quad \text{de sorte que :} \quad \sum_{n=1}^{N} w(\sigma_n,\alpha_n) = 1$$

On peut prendre par exemple une fonction qui dépend du site du satellite en repère capteur :

$$f(\sigma_n,\alpha_n) = \frac{\sigma_n}{1+\sigma_n}$$

Cependant, il n'est pas toujours aisé d'identifier les biais directionnels des capteurs en usine. Dans un deuxième mode de réalisation, la calibration vise à déterminer des biais capteurs $\beta_{1\,capteur\,m}$ qui dépendent de la direction d'arrivée du signal.

$$\lceil d_{2,n\,mesuré} - d_{2,n\,théorique}(\psi,\theta,\varphi) = \beta_{1\,capteur\,2}(\sigma_n,\alpha_n) \qquad \text{pour n = 1,2, .. N}$$

$$\mid \quad \vdots$$

$$\lbrace d_{m,n\,mesuré} - d_{m,n\,théorique}(\psi,\theta,\varphi) = \beta_{1\,capteur\,m}(\sigma_n,\alpha_n) \qquad \text{pour n = 1,2, .. N}$$

$$\mid \quad \vdots$$

$$\lfloor d_{M,n\,mesuré} - d_{M,n\,théorique}(\psi,\theta,\varphi) = \beta_{1\,capteur\,M}(\sigma_n,\alpha_n) \qquad \text{pour n = 1,2, .. N}$$

Pour limiter le nombre de paramètres inconnus à identifier (plus on a de paramètres plus on est sensible au bruit car on bénéficie de moins de redondances de mesures par rapport au nombre d'inconnues), on modélise chacun des biais par une combinaison linéaire de fonction dépendant des directions d'arrivée, représentées par l'angle de site $\sigma$ et d'azimut $\alpha$ (angles en repère capteur).

$$d_{2,n\,mesuré} - d_{2,n\,théorique}(\psi,\theta,\varphi) = a_{1,2}.f_{1,2}(\sigma_n,\alpha_n) + a_{2,2}.f_{2,2}(\sigma_n,\alpha_n) + .. + a_{P,2}.f_{P,2}(\sigma_n,\alpha_n)$$

$$\vdots$$

$$d_{m,n\,mesuré} - d_{m,n\,théorique}(\psi,\theta,\varphi) = a_{1,m}.f_{1,m}(\sigma_n,\alpha_n) + a_{2,m}.f_{2,m}(\sigma_n,\alpha_n) + .. + a_{P,m}.f_{P,m}(\sigma_n,\alpha_n)$$

$$\vdots$$

$$d_{M,n\,mesuré} - d_{M,n\,théorique}(\psi,\theta,\varphi) = a_{1,M}.f_{1,M}(\sigma_n,\alpha_n) + a_{2,M}.f_{2,M}(\sigma_n,\alpha_n) + .. + a_{P,M}.f_{P,M}(\sigma_n,\alpha_n)$$

$$\text{pour n = 1,2, .. N}$$

Pour chaque hypothèse d'attitude ($\psi$, $\theta$, $\varphi$) considérée, on a (M-1) x P inconnues et (M-1) x N équations (mesures de déphasage). Pour avoir une seule hypothèse ($\psi$, $\theta$, $\varphi$) qui donne une somme des résidus nulle ou proche de zéro il faut : (M-1) x P + 3 < (M-1).N
Si M > 3 il suffit d'avoir N > P
On résout le système pour chaque capteur (m = 2 à M) par les moindres carrés :

$$H_m\,X_m = Z_m$$

$$X_m = \begin{bmatrix} a_{1,m} \\ a_{2,m} \\ \vdots \\ a_{P,m} \end{bmatrix}_{Px1} \qquad H_m = \begin{bmatrix} f_{1,m}(\sigma_1,\alpha_1) & f_{2,m}(\sigma_1,\alpha_1) & .. & f_{P,m}(\sigma_1,\alpha_1) \\ \vdots & \vdots & & \vdots \\ f_{1,m}(\sigma_n,\alpha_n) & f_{2,m}(\sigma_n,\alpha_n) & .. & f_{P,m}(\sigma_n,\alpha_n) \\ \vdots & \vdots & & \vdots \\ f_{1,m}(\sigma_N,\alpha_N) & f_{2,m}(\sigma_N,\alpha_N) & .. & f_{P,m}(\sigma_N,\alpha_N) \end{bmatrix}_{NxP}$$

$$Z_m = \begin{bmatrix} d_{m,1\,mesuré} - d_{m,1\,théorique}(\psi,\theta,\varphi) \\ \vdots \\ d_{m,n\,mesuré} - d_{m,n\,théorique}(\psi,\theta,\varphi) \\ \vdots \\ d_{m,N\,mesuré} - d_{m,N\,théorique}(\psi,\theta,\varphi) \end{bmatrix}_{Nx1}$$

$$\hat{X}_m = H_m^{\,*}\,Z_m$$

avec la matrice pseudo-inverse :

$$H_m^{\,*} = (H_m^{\,T}H_m)^{-1}H_m^{\,T}$$

Avec pondération :

$$W^{1/2}\,H_m\,X_m = W^{1/2}\,Z_m$$

$$W^{1/2} = \begin{bmatrix} \sqrt{w_1} & 0 & .. & .. & 0 \\ 0 & . & 0 & & : \\ : & 0 & \sqrt{w_n} & 0 & : \\ : & & 0 & . & 0 \\ 0 & .. & .. & 0 & \sqrt{w_N} \end{bmatrix}_{Nx1} \qquad W = \begin{bmatrix} w_1 & 0 & .. & .. & 0 \\ 0 & . & 0 & & : \\ : & 0 & w_n & 0 & : \\ : & & 0 & . & 0 \\ 0 & .. & .. & 0 & w_N \end{bmatrix}_{Nx1}$$

$$\hat{X}_m = H_m{}^* W^{1/2} Z_m$$

Avec la matrice pseudo-inverse pondérée :

$$H_m{}^* = \left(H_m{}^T (W^{1/2})^T (W^{1/2}) H_m\right)^{-1} H_m{}^T (W^{1/2})^T$$

Ou de manière équivalente :

$$\hat{X}_m = (H_m{}^T W H_m)^{-1} H_m{}^T W Z_m$$

Les résidus deviennent :

$$R_m(\psi, \theta, \varphi) = \begin{bmatrix} \rho_{m,1}(\psi, \theta, \varphi) \\ : \\ \rho_{m,n}(\psi, \theta, \varphi) \\ : \\ \rho_{m,N}(\psi, \theta, \varphi) \end{bmatrix} = H_m \hat{X}_m - Z_m$$

La somme pondérée des carrés des résidus devient :

$$\Phi(\psi, \theta, \varphi) = \sum_{m=2}^{M} \sum_{n=1}^{N} w(\sigma_n, \alpha_n) . \left| \rho_{m,n}(\psi, \theta, \varphi) \right|^2$$

$$\Phi(\psi, \theta, \varphi) = \sum_{m=2}^{M} \left\| W^{1/2} (H_m \hat{X}_m - Z_m) \right\|^2 = \sum_{m=2}^{M} (H_m \hat{X}_m - Z_m)^T W (H_m \hat{X}_m - Z_m)$$

Exemple : P = 3,

$$f_{1,m}(\sigma, \alpha) = 1$$

$$f_{2,m}(\sigma, \alpha) = 1/(\sigma - \sigma_0).\sin(\alpha)$$

$$f_{3,m}(\sigma, \alpha) = 1/(\sigma - \sigma_0).\cos(\alpha)$$

Avantageusement, les étapes de détermination d'une hypothèse d'attitude de l'antenne et de calcul de biais sont réalisées façon itérative et comprennent des étapes de :

- initialisation (501) d'une hypothèse dite précédente $(\psi_{n-1}, \theta_{n-1}, \varphi_{n-1})$,
- calcul (502) d'une hypothèse courante $(\psi_n, \theta_n, \varphi_n)$ à partir de l'hypothèse précédente $(\psi_{n-1}, \theta_{n-1}, \varphi_{n-1})$,
- calcul des sommes des résidus au carré (503) à partir de l'hypothèse courante $(\psi_n, \theta_n, \varphi_n)$,
- calcul (504) d'un gradient à partir des sommes des résidus au carré,
- comparaison (505) du gradient avec un seuil prédéterminé (S), si le gradient est inférieur au seuil (S) alors la calibration est terminé (506), sinon le retour à l'étape de calcul (502) d'une hypothèse courante avec l'hypothèse courante comme hypothèse précédente.

Selon une variante de réalisation de l'invention, le calcul (502) d'une hypothèse courante à partir d'une hypothèse précédente suit la relation suivante :

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \Phi(\psi_n, \theta_n, \varphi_n) . \frac{\vec{Grad}\Phi(\psi_n, \theta_n, \varphi_n)}{\left\| \vec{Grad}\Phi(\psi_n, \theta_n, \varphi_n) \right\|^2}$$

Avec

$$\vec{Grad}\Phi(\psi, \theta, \varphi) \overset{def}{=} \begin{bmatrix} \dfrac{\partial \Phi}{\partial \psi}(\psi, \theta, \varphi) \\ \dfrac{\partial \Phi}{\partial \theta}(\psi, \theta, \varphi) \\ \dfrac{\partial \Phi}{\partial \varphi}(\psi, \theta, \varphi) \end{bmatrix}$$

De sorte que par approximation :

$$\Phi(\psi + d\psi, \theta + d\theta, \varphi + d\varphi) \cong \Phi(\psi, \theta, \varphi) + < \vec{Grad}\Phi(\psi_n, \theta_n, \varphi_n), \begin{bmatrix} d\psi \\ d\theta \\ d\varphi \end{bmatrix} >$$

Soit :

$$\Phi(\psi_{n+1}, \theta_{n+1}, \varphi_{n+1}) \cong \Phi(\psi_n, \theta_n, \varphi_n) + < \vec{Grad}\Phi(\psi_n, \theta_n, \varphi_n), \begin{bmatrix} \psi_{n+1} - \psi_n \\ \theta_{n+1} - \theta_n \\ \varphi_{n+1} - \varphi_n \end{bmatrix} >$$

$$\Phi(\psi_{n+1}, \theta_{n+1}, \varphi_{n+1}) \cong \Phi(\psi_n, \theta_n, \varphi_n) - \Phi(\psi_n, \theta_n, \varphi_n) < \vec{Grad}\Phi(\psi_n, \theta_n, \varphi_n), \vec{Grad}\Phi) > / \left\| \vec{Grad}\Phi \right\|^2$$

$$\Phi(\psi_{n+1}, \theta_{n+1}, \varphi_{n+1}) \cong 0$$

Dans le cas où le minimum du critère de vraisemblance est nul, la méthode converge très rapidement vers ce minimum. C'est le cas idéal où il existe une solution exacte (lorsque les résidus sont nuls), c'est à dire le cas où les $d_{m,n\ mesuré}$ sont sans bruit de mesure et où les biais d'antennes $\beta_{0\ capteur\ m}$ sont parfaitement tabulés, c'est-à-dire calibré sans erreur de mesure en usine.

En pratique, il est peu probable que la somme de carrés des résidus soit nulle. Il est donc possible que la méthode ne converge pas très bien.

Selon une autre variante de réalisation de l'invention, le calcul d'une hypothèse courante à partir d'une hypothèse précédente suit la relation suivante :

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \alpha \,.\, \vec{Grad}\Phi(\psi_n,\theta_n,\varphi_n)$$

Avec $\alpha$ un coefficient de recalage dont la valeur est choisie entre 0 et 1, de manière fixe ou évolutive.

Cette méthode est plus robuste et permet d'éviter les problèmes de divergences rencontrés avec la méthode précédente.

On peut utiliser la méthode des différences finies pour calculer le gradient $\vec{Grad}\Phi(\psi_n,\theta_n,\varphi_n)$ :

$$\vec{Grad}\Phi(\psi,\theta,\varphi) = \lim_{d\to 0} \begin{bmatrix} \dfrac{\Phi(\psi+d\psi,\theta,\varphi)-\Phi(\psi,\theta,\varphi)}{d\psi} \\ \dfrac{\Phi(\psi,\theta+d\theta,\varphi)-\Phi(\psi,\theta,\varphi)}{d\theta} \\ \dfrac{\Phi(\psi,\theta,\varphi+d\varphi)-\Phi(\psi,\theta,\varphi)}{d\varphi} \end{bmatrix} \cong \begin{bmatrix} \dfrac{\Phi(\psi+d\psi,\theta,\varphi)-\Phi(\psi,\theta,\varphi)}{d\psi} \\ \dfrac{\Phi(\psi,\theta+d\theta,\varphi)-\Phi(\psi,\theta,\varphi)}{d\theta} \\ \dfrac{\Phi(\psi,\theta,\varphi+d\varphi)-\Phi(\psi,\theta,\varphi)}{d\varphi} \end{bmatrix} \quad pour\ d\ petit$$

Selon un autre mode de réalisation, on peut calculer le gradient $\vec{Grad}\Phi(\psi_n,\theta_n,\varphi_n)$ par dérivation :

$$\Phi(\psi,\theta,\varphi) = \sum_{m=2}^{M}\sum_{n=1}^{N}\left|\rho_{m,n}(\psi,\theta,\varphi)\right|^2$$

$$\frac{\partial\Phi}{\partial\psi}(\psi,\theta,\varphi) = \sum_{m=2}^{M}\sum_{n=1}^{N}\frac{\partial\rho_{m,n}}{\partial\psi}\,.\,\rho_{m,n}(\psi,\theta,\varphi)$$

$$\rho_{m,n}(\psi,\theta,\varphi) = d_{m,n\ mesuré} - d_{m,n\ théorique}(\psi,\theta,\varphi) - \tilde{\beta}_{1\ capteur\ m}(\psi,\theta,\varphi)$$

$$\frac{\partial\rho_{m,n}}{\partial\psi}(\psi,\theta,\varphi) = -\frac{\partial d_{m,n\ théorique}}{\partial\psi}(\psi,\theta,\varphi) - \frac{\partial\tilde{\beta}_{1\ capteur\ m}}{\partial\psi}(\psi,\theta,\varphi)$$

$$\tilde{\beta}_{1\ capteur\ m}(\psi,\theta,\varphi) = \sum_{n=1}^{N}\left(d_{m,n\ mesuré} - d_{m,n\ théorique}(\psi,\theta,\varphi)\right)$$

$$\frac{\partial\tilde{\beta}_{1\ capteur\ m}}{\partial\psi}(\psi,\theta,\varphi) = -\sum_{n=1}^{N}\frac{\partial d_{m,n\ théorique}}{\partial\psi}(\psi,\theta,\varphi)$$

$$d_{m,n\ théorique}(\psi,\theta,\varphi) = 2\pi\,.\,\vec{u}_{n\ capteurs}(\psi,\theta,\varphi)\,.\,(\vec{r}_{m\ capteurs}-\vec{r}_{1\ capteurs})\,/\,\lambda$$

$$\frac{\partial d_{m,n\,théorique}}{\partial \psi}(\psi,\theta,\varphi) = 2\pi \cdot \frac{\partial \vec{u}_{n\,capteurs}}{\partial \psi}(\psi,\theta,\varphi) \cdot (\vec{r}_{m\,capteurs} - \vec{r}_{1\,capteurs}) / \lambda$$

(En faisant abstraction de $\beta_{0\,capteur\,m}(\sigma_n,\,\alpha_n)$)

$$\vec{u}_{n\,capteurs}(\psi,\theta,\varphi) = M(\psi,\theta,\varphi) \cdot \vec{u}_{n\,TGL}$$

$$\frac{\partial \vec{u}_{n\,capteurs}}{\partial \psi}(\psi,\theta,\varphi) = \frac{\partial M}{\partial \psi}(\psi,\theta,\varphi) \cdot \vec{u}_{n\,TGL}$$

$$M(\psi,\theta,\varphi) = \begin{bmatrix} 1 & 0 & 0 \\ 0 & \cos\varphi & -\sin\varphi \\ 0 & \sin\varphi & \cos\varphi \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} \cos\psi & \sin\psi & 0 \\ -\sin\psi & \cos\psi & 0 \\ 0 & 0 & 1 \end{bmatrix}$$

$$\frac{\partial M}{\partial \psi}(\psi,\theta,\varphi) = \begin{bmatrix} 1 & 0 & 0 \\ 0 & \cos\varphi & -\sin\varphi \\ 0 & \sin\varphi & \cos\varphi \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} -\sin\psi & \cos\psi & 0 \\ -\cos\psi & -\sin\psi & 0 \\ 0 & 0 & 0 \end{bmatrix} \quad \text{pour}$$

$$\frac{\partial \Phi}{\partial \psi}(\psi,\theta,\varphi)$$

$$\frac{\partial M}{\partial \theta}(\psi,\theta,\varphi) = \begin{bmatrix} 1 & 0 & 0 \\ 0 & \cos\varphi & -\sin\varphi \\ 0 & \sin\varphi & \cos\varphi \end{bmatrix} \begin{bmatrix} -\sin\theta & 0 & -\cos\theta \\ 0 & 0 & 0 \\ \cos\theta & 0 & -\sin\theta \end{bmatrix} \begin{bmatrix} \cos\psi & \sin\psi & 0 \\ -\sin\psi & \cos\psi & 0 \\ 0 & 0 & 0 \end{bmatrix} \quad \text{pour}$$

$$\frac{\partial \Phi}{\partial \theta}(\psi,\theta,\varphi)$$

$$\frac{\partial M}{\partial \varphi}(\psi,\theta,\varphi) = \begin{bmatrix} 0 & 0 & 0 \\ 0 & -\sin\varphi & -\cos\varphi \\ 0 & \cos\varphi & -\sin\varphi \end{bmatrix} \begin{bmatrix} \cos\theta & 0 & -\sin\theta \\ 0 & 1 & 0 \\ \sin\theta & 0 & \cos\theta \end{bmatrix} \begin{bmatrix} \cos\psi & \sin\psi & 0 \\ -\sin\psi & \cos\psi & 0 \\ 0 & 0 & 1 \end{bmatrix}$$

$$\text{pour } \frac{\partial \Phi}{\partial \varphi}(\psi,\theta,\varphi)$$

Cette méthode de calcul exacte n'est pas forcément plus avantageuse en terme de complexité (nombre d'opérations arithmétiques) comparé à la méthode des différences finies nécessitant uniquement le calcul du critère de vraisemblance $\Phi(\psi,\theta,\varphi)$ en quatre points : $(\psi,\theta,\varphi)$, $(\psi + d\psi,\theta,\varphi)$, $(\psi,\theta + d\theta,\varphi)$ et $(\psi,\theta,\varphi + d\varphi)$

Le procédé pour la calibration d'une antenne d'un récepteur selon l'invention calcule des biais de capteurs à partir de déphasages $d_{m,n\,mesuré}$ pour chacun des capteurs $c_1, \ldots c_M$ sur chacun des signaux $s_1, \ldots, s_N$.

Les dispositifs pour le traitement du signal selon l'art connu ne sont pas conçu pour effectuer de telles mesures.

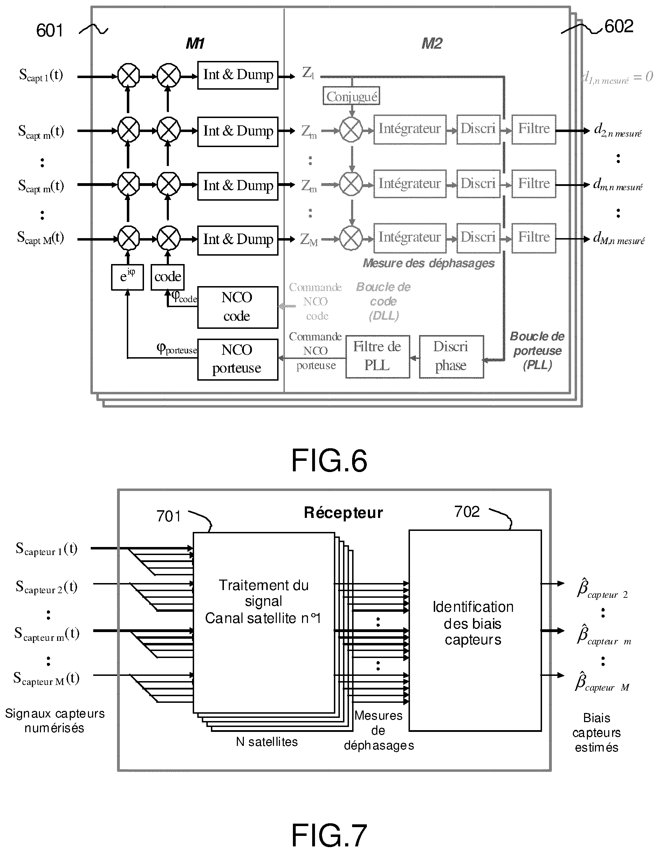

Ainsi, l'invention concerne aussi un dispositif pour le traitement de signaux provenant d'une pluralité de satellites comportant, pour chaque satellite, des moyens adaptés pour le traitement du signal. La figure 6 montre un exemple de réalisation d'un dispositif selon l'invention.

Chacun desdits moyens adaptés pour le traitement du signal comporte un premier module M1 (601) réalisé de préférence de façon matérielle et un second module M2 (602) réalisé de préférence de façon logicielle. Le module matériel reçoit des signaux $S_{capteur\,1}, \ldots, S_{capteur\,M}$, provenant de chacun des capteurs de l'antenne, numérisés par des convertisseurs analogique numérique (CAN) à une fréquence Fe. Le module matériel produit pour chacun de ces signaux de capteurs $S_{capteur\ 1}$, ..., $S_{capteur\ M}$ un signal $Z_1$, ..., $Z_M$. Les signaux $Z_1$, ... , $Z_M$ du canal n sont les résultats, exprimés en nombre complexes, de la corrélation des signaux reçus respectivement sur les capteurs $C_1$, ... , $C_M$ par un signal local constitué par une porteuse complexe et un code d'étalement propre au satellite affecté au canal n, suivant l'état de l'art de la démodulation des signaux GNSS (acronyme de l'expression « Global Navigation Satellite System »). La corrélation consiste à multiplier les signaux reçus par le signal local ($\varphi_{porteuse}$ et $\varphi_{code}$) puis à intégrer par intervalle de temps (bloc « Integrate and Dump »). A chaque fin d'intervalle (période de la fréquence Fw) chaque intégrateur produit le résultat $Z_m$ et recommence à zéro. La porteuse locale complexe est généré à partir d'une phase produite par un oscillateur numérique (NCO : Numerically Controlled Oscillator) piloté en fréquence par la boucle de porteuse, suivant l'état de l'art (bloc NCO porteuse). Le code local est produit par un générateur de code à partir d'une phase de code fournie par un NCO code piloté en fréquence par la boucle de code, suivant l'état de l'art (bloc NCO code). La démodulation est réalisée en matériel numérique (FPGA ou ASIC). La boucle de porteuse et la boucle de code, non représentée ici, sont réalisées en logiciel. La boucle de porteuse utilise par exemple la voie de corrélation du capteur 1 et applique un discriminateur de phase sur $Z_1$ (bloc discri. phase), qui alimente un correcteur de boucle (bloc filtre PLL), puis le NCO porteuse, suivant l'état de l'art.

Le module logiciel permet de mesurer pour chacun des signaux $Z_1$, ..., $Z_M$ un déphasage $d_{1,n\ mesuré}$, ... $d_{M,n\ mesuré}$.

Pour cela le logiciel effectue la multiplication complexe des résultats $Z_2$, ..., $Z_M$ de la corrélation par le conjugué de $Z_1$, puis l'intégration des produits (nombre complexe) sur des intervalles multiples de 1/Fw (blocs intégrateur). Des discriminateurs de phase (blocs discri.) permettent d'extraire l'argument (angle) des résultats complexe de l'intégration, estimation brute du déphasage mesuré $d_{m,n\ mesuré}$ Ensuite dernier un filtrage (blocs filtre) fournit la mesure finale du déphasage.

La démodulation des signaux, numérisés à la fréquence Fe, est réalisée préférentiellement en matériel dans un composant numérique dédié tel qu'un ASIC ou FPGA. Elle demande une fréquence de calcul très élevée qui est plus difficile à réaliser en logiciel.

Définitions :

Notation : $expi(\varphi) = exp(j.\ \varphi) = e^{j\varphi}$ ($j^2 = -1$)

$F_r$ : Fréquence résiduelle des signaux numérisés en bande de base ($F_r$ petit devant Fe)
$\theta_{m,n}$ : Déphasage à l'instant t = 0 du signal reçu de la source n sur le capteur m
$\theta_n$ : Déphasage à l'instant t = 0 du signal local dans le canal n
$C_n(t)$ : code d'étalement du signal reçu de la source n
(t est le temps courant)
$R(\tau)$ : Fonction d'autocorrélation du code

$$R(\tau) = 1 - |\tau| \quad si\ |\tau| < 1 \qquad R(\tau=0) = 1$$

$$R(\tau) = 0 \qquad sinon$$

$$R_{n,n}(\tau) = {}^1/_T \int_{[kT,\ (k+1)T]} C_n(t)\ .\ C_n(t - \tau)\ dt = R(\tau)$$

$$R_{n,p}(\tau) = {}^1/_T \int_{[kT,\ (k+1)T]} C_p(t)\ .\ C_n(t - \tau)\ dt \cong 0 \ \ si\ p \neq n$$

(n et p sont les indices de deux sources, [kT,(k+1)T] correspond au $k^{ième}$ intervalle d'intégration dans les corrélateurs)

Signaux reçus :

Le signal reçu sur le capteur m est la somme des signaux reçus des différentes sources visibles plus du bruit.

$$S_{reçu\ m}(t) = \Sigma_{n=1,..,N}\ S_{reçu\ m,n}(t)\ +\ bruit$$

Signal reçu de la source n sur le capteur m :

$$S_{\text{reçu } m,n}(t) = A.\text{expi}(\ \varphi_{\text{porteuse reçu } m,n}(t)\ ) \cdot C_n(\ \varphi_{\text{code reçu } n}(t)\ )$$

$$S_{\text{reçu } m,n}(t) = A.\text{expi}(\ 2\pi.F_r.t + \theta_{m,n}\ ) \cdot C_n(\ t\ )$$

(A est l'amplitude du signal reçu)

Signal local dans le canal n :

$$S_{\text{local } n}(t)\ =\ \text{expi}(\ -\varphi_{\text{porteuse locale } n}(t)\ ) \cdot C_n(\ \varphi_{\text{code local } n}(t)\ )$$

$$S_{\text{local } n}(t)\ =\ \text{expi}(\ -2\pi.F_r.t - \theta_n\ ) \cdot C_n(\ t - \tau\ )$$

Corrélation :

Le corrélateur effectue l'opération :

$$Z_{m,n}(k)\ =\ {}^1\!/_T \int_{[kT,\ (k+1)T]} S_{\text{reçu } m}(t) \cdot S_{\text{local } n}(t)\ dt$$

T : temps d'intégration cohérent (typiquement T = 20 ms)
(k est l'indice du k$^{\text{ième}}$ intervalle d'intégration [kT,(k+1)T] dans les corrélateurs)

Les codes satellites étant décorrélés ($R_{n,p}(\tau) \cong 0$) on peut écrire :

$$Z_{m,n}(k) = {}^1\!/_T \int_{[kT,\ (k+1)T]} S_{\text{reçu } m,n}(t) \cdot S_{\text{local } n}(t)\ dt\ +\ \text{bruit}$$

$$Z_{m,n}(k) = {}^1\!/_T \int_{[kT,\ (k+1)T]} \text{expi}(\ \varphi_{\text{port reçue } m,n}(t) - \varphi_{\text{port locale } n}(t)\ )$$

$$\cdot C_n(\ \varphi_{\text{code reçu } n}(t)\ ) \cdot C_n(\ \varphi_{\text{code local } n}(t)\ )\ dt$$

$$Z_{m,n}(k) = A.\text{expi}(\ \theta_{m,n} - \theta_n\ ) \cdot {}^1\!/_T \int_{[kT,\ (k+1)T]} C_n(\ t\ ) \cdot C_n(\ t - \tau\ )\ dt\ +\ \text{bruit}$$

$$Z_{m,n}(k) = A.\text{expi}(\ \theta_{m,n} - \theta_n\ ) \cdot R(\tau)\ +\ \text{bruit}$$

On suppose que le code local du canal n est en phase avec le code reçu du satellite n, grâce à la boucle de code, réalisée suivant l'état de l'art. D'où $\tau = 0$ et $R(\tau) = 1$

$$Z_{m,n}(k) = A.\text{expi}(\ \theta_{m,n} - \theta_n\ ) + \text{bruit}$$

Les boucles de poursuite (code et porteuse) sont réalisées en logiciel car elles fonctionnent à basse fréquence (Fw = 50 Hz), elles utilisent des fonctions mathématiques plus complexes, et présentent différents modes (recherche, transition, poursuite, poursuite dégradées, etc.)
On choisit de réaliser la boucle de phase de porteuse (PLL Phase Lock Loop) sur le capteur 1 de façon arbitraire, on pourrait tout aussi bien utiliser un autre capteur.

Discriminateur de phase pour le signal n :

$$D\varphi_n(k) = \text{argument}(Z_{1,n}(k))$$

$$D\varphi_n(k) = \theta \qquad\qquad Z_{1,n}(k) = \rho e^{i\theta} \qquad\qquad \rho \text{ module, } \theta \text{ argument}$$

$$D\varphi_n(k) = \text{arctangente}(I, Q) \qquad Z_{1,n}(k) = I + j.Q \qquad I \text{ partie réelle, } Q \text{ partie imaginaire}$$

D'où :

$$D\varphi_n(k) = \theta_{1,n} - \theta_n + \text{bruit} \qquad\qquad\qquad\qquad (\text{rad})$$

Correcteur de boucle (filtre PLL) :

$$A(k) = A(k-1) \qquad\qquad + T.K_1. D\varphi(k) . \lambda_{porteuse}/(2\pi) \qquad (\text{m/s}^2)$$

$$V(k) = V(k-1) + TA(k) + T.K_2. D\varphi(k) . \lambda_{porteuse}/(2\pi) \qquad (\text{m/s})$$

$$C(k) = \qquad\qquad V(k) + K_3. D\varphi(k) . \lambda_{porteuse}/(2\pi) \qquad (\text{m/s})$$

(A et V sont des variables internes au correcteur, K1, K2, K3 sont les gains de recalage et C la commande en sortie du correcteur)

Commande NCO :

$$C_{NCO\ porteuse}(k) = C(k) / \lambda_{porteuse} \qquad\qquad\qquad\qquad (\text{Hz})$$

L'estimation des déphasages est réalisée de préférence en logiciel car c'est un traitement à basse fréquence (Fw = 50 Hz).

Produits complexes :

$$\Pi_{m,n}(k) = Z_{m,n}(k) \times \text{conjugué}(Z_{1,n}(k))$$

$$\Pi_{m,n}(k) = A^2. \text{expi}(\theta_{m,n} - \theta_{1,n}) + \text{bruit}$$

Intégration cohérente :

$$\Pi'_{m,n}(p) = \Sigma_{k=p.K+1,..,(p+1).K}\; \rho_{m,n}(k) = K.A^2.\; expi(\; \theta_{m,n} - \theta_{1,n}\;)\; +\; bruit$$

Discriminateur brut :

$$d_{m,n\ brut}(p) = argument(\;\Pi'_{m,n}(p)\;) = \theta_{m,n} - \theta_{1,n}\; +\; bruit$$

Discriminateur filtré : (filtre à réponse impulsionnelle infinie IIR du premier ordre) :

$$d_{m,n\ mesuré}(p) = e^{-\tau 0}.\; d_{m,n\ mesuré}(p)\; + (1\text{-}e^{-\tau 0}).\; d_{m,n\ brut}(p)$$

$\tau_0$ : Constante de temps du filtre

La quantité $d_{m,n\ mesuré}(p)$ fournit une estimation du déphasage du signal satellite n reçu sur le capteur m par rapport au capteur 1.

Dans ce déphasage on retrouve deux composantes :

- l'une due à la différence de chemin optique entre les capteurs, liée à l'attitude de l'antenne par rapport à la direction du satellite,
- l'autre due aux biais des voies analogiques entre les centres de phase des capteurs et le convertisseur analogique numérique.

Pour estimer la partie biais, il faut éliminer la composante liée à l'attitude de l'antenne, qu'on ne connaît pas, a priori. L'invention propose d'identifier simultanément les deux composantes au travers des déphasages mesurés, en résolvant un système d'équations à plusieurs inconnues (biais et attitudes), non linéaire.

Le système n'étant pas linéaire par rapport aux trois composantes d'attitude que sont angles d'Euler ($\psi$, $\theta$, $\varphi$), l'invention propose de faire une recherche dans le domaine des angles d'Euler. Pour chaque hypothèse d'attitude ($\psi$, $\theta$, $\varphi$) considérée, on résout le système qui devient linéaire (car on a fixé les trois inconnues qui sont non linéairement dépendantes) et on calcule un critère de vraisemblance, qui utilise la redondance des mesures par rapport au nombre d'inconnue. Finalement, on retient l'hypothèse ($\psi$, $\theta$, $\varphi$) qui donne le meilleur critère. Le critère de vraisemblance mesure la cohérence entre les mesures, qui sont redondantes.

L'invention concerne aussi un récepteur de signaux satellites. La figure 7 montre un exemple de réalisation d'un récepteur selon l'invention. Le récepteur comporte une pluralité de capteurs répartis sur une antenne. Le récepteur comporte des moyens pour numériser les signaux provenant des capteurs, un dispositif de traitement du signal 701 selon l'invention et des moyens de mise en oeuvre 702 du procédé selon l'invention.

Les biais calculés peuvent ensuite être utilisés par des méthodes de traitement d'antenne.

**Revendications**

1. Procédé pour la calibration d'une antenne d'un récepteur de signaux ($s_1$, ..., $s_N$) provenant d'une pluralité de sources, ledit récepteur comportant une pluralité de capteurs ($c_1$, ..., $c_M$), **caractérisé en ce qu'**il comporte les étapes suivantes :

   - la mesure (401) d'un déphasage ($d_{m,n\ mesuré}$) pour chacun des capteurs ($c_1$, ..., $c_M$) sur chacun des signaux ($s_1$, ..., $s_N$),
   - la détermination (402) d'au moins une valeur d'attitude de l'antenne, ladite attitude étant définie par un jeu de coordonnées, à partir d'une détermination d'une pluralité d'hypothèses d'attitude de l'antenne, et pour chaque hypothèse d'attitude déterminée:

      o le calcul (404) d'un biais ($\beta_{1\ capteur\ m}$) pour chacun des capteurs à partir des déphasages mesurés ($d_{m,n\ mesuré}$) et des déphasages théoriques ($d_{m,n\ théorique}$) du capteur,
      o le calcul (405) d'un indicateur de vraisemblance ($\Phi$) de l'hypothèse d'attitude, à partir des déphasages mesurés ($d_{m,n\ mesuré}$), des déphasages théoriques ($d_{m,n\ théorique}$) et des biais calculés ($\beta_{1\ capteur\ m}$)

- le calcul (403), pour chacun des capteurs sur chacun des signaux, d'un déphasage théorique ($d_{m,n\ théorique}$) en fonction de l'attitude de l'antenne, à partir des directions d'arrivée des signaux,
- le calcul (404) d'un biais ($\beta_{1\ capteur\ m}$) pour chacun des capteurs à partir des déphasages mesurés ($d_{m,n\ mesuré}$) et des déphasages théoriques ($d_{m,n\ théorique}$) du capteur, et
- la sélection (406) des biais pour lesquels la valeur de l'indicateur de vraisemblance est la plus faible.

2. Procédé pour la calibration d'une antenne d'un récepteur selon la revendication 1, dans lequel, l'étape de détermination (402) d'au moins une valeur d'attitude de l'antenne comprend la détermination d'une unique valeur déterminée par des moyens de mesure adaptés.

3. Procédé suivant la revendication 2 dans lequel, le calcul (404) d'un biais ($\beta_{1\ capteur\ m}$) pour chacun des capteurs à partir des déphasages mesurés ($d_{m,n\ mesuré}$) et des déphasages théoriques ($d_{m,n\ théorique}$) du capteur est réalisé en suivant une méthode des moindres carrés.

4. Procédé pour la calibration d'une antenne d'un récepteur selon la revendication 3, dans lequel le calcul (403), pour chacun des capteurs sur chacun des signaux, d'un déphasage théorique ($d_{m,n\ théorique}$) prend aussi en compte des valeurs prédéterminées des biais capteurs ($\beta_{0\ capteur\ m}$) liées à des défauts du récepteur et dépendant de la direction d'arrivée des signaux sources, la calibration visant à identifier des biais capteurs résiduels ($\beta_{1\ capteur\ m}$) indépendants de la direction d'arrivée des signaux.

5. Procédé pour la calibration d'une antenne d'un récepteur selon la revendication 4, dans lequel, les coordonnées définissant l'attitude de l'antenne étant un cap ($\psi$), une assiette ($\theta$) et une inclinaison ($\varphi$), le calcul de l'indicateur de vraisemblance ($\Phi$) comprend le calcul d'un résidu pour chaque couple signal capteur, le résidu pour un capteur et un signal donnés suivant la relation :

$$\rho_{m,n}(\psi,\theta,\varphi) = d_{m,n\ mesuré} - d_{m,n\ théorique}(\psi,\theta,\varphi) - \tilde{\beta}_{1\ capteur\ m}(\psi,\theta,\varphi),$$

Avec $\rho_{m,n}(\psi,\theta,\varphi)$ le résidu associé au couple signal n et capteur m, $d_{m,n\ mesuré}$ le déphasage mesuré pour le capteur m pour le signal n, $d_{m,n\ théorique}(\psi,\theta,\varphi)$ le déphasage théorique pour le capteur m pour le signal n et pour le cap $\psi$, l'assiette $\theta$ et l'inclinaison $\varphi$, $\tilde{\beta}_{1\ capteur\ m}(\psi,\theta,\varphi)$ une valeur estimée du biais du capteur m pour le cap $\psi$, l'assiette $\theta$ et l'inclinaison $\varphi$.
et en ce que l'indicateur de vraisemblance est une somme pondérée des carrés des résidus suivant la relation suivante :

$$\Phi(\psi,\theta,\varphi) = \sum_{m=2}^{M}\sum_{n=1}^{N} w(\sigma_n,\alpha_n).\left|\rho_{m,n}(\psi,\theta,\varphi)\right|^2$$

Avec $\Phi(\psi,\theta,\varphi)$ l'indicateur de vraisemblance pour le cap $\psi$, l'assiette $\theta$ et l'inclinaison $\varphi$, $\rho_{m,n}(\psi,\theta,\varphi)$ le résidu associé au couple signal n et capteur m et $w(\sigma_n,\alpha_n)$ une pondération de la source n, dépendant de $\sigma_n$ l'angle de site en repère capteur et de $\alpha_n$ l'angle d'azimut en repère capteur.

6. Procédé pour la calibration d'une antenne d'un récepteur selon l'une des revendications 1 à 5, dans lequel, le calcul (404) d'un biais $\beta_{1\ capteur\ m}$ pour chacun des capteurs à partir des déphasages mesurés ($d_{m,n\ mesuré}$) et des déphasages théoriques ($d_{m,n\ théorique}$) du capteur est réalisé en suivant une méthode des moindres carrés pondérés.

7. Procédé pour la calibration d'une antenne d'un récepteur selon la revendication 5, dans lequel le biais des capteurs étant indépendant de la direction d'arrivée des signaux, le calcul (404) d'un biais $\beta_{1\ capteur\ m}$ pour chacun des capteurs à partir des déphasages mesurés ($d_{m,n\ mesuré}$) et des déphasages théoriques ($d_{m,n\ théorique}$) du capteur est réalisé selon une moyenne pondérée.

$$\tilde{\beta}_{1\ capteur\ m}(\psi,\theta,\varphi) = \frac{1}{N}\sum_{n=1}^{N} w(\sigma_n,\alpha_n).\left(d_{m,n\ mesuré} - d_{m,n\ théorique}(\psi,\theta,\varphi)\right)$$

Avec $\tilde{\beta}_{1\ capteur\ m}(\psi,\theta,\varphi)$ le biais d'un capteur m, pour le cap $\psi$, l'assiette $\theta$ et l'inclinaison $\varphi$ et $w(\sigma_n,\alpha_n)$ une pondération

de la source n, dépendant de $\sigma_n$ l'angle de site en repère capteur et de $\alpha_n$ l'angle d'azimut en repère capteur.

8. Procédé pour la calibration d'une antenne d'un récepteur selon la revendication 1, dans lequel, la calibration visant à identifier des biais résiduels ($\beta_{1\ capteur\ m}$) dépendants de la direction d'arrivée des signaux, les biais des capteurs sont exprimés par des combinaisons linéaires, comportant des coefficients de fonctions des directions d'arrivée des signaux en repère antenne.

9. Procédé pour la calibration d'une antenne d'un récepteur selon la revendication 8, dans lequel les coefficients des combinaisons linéaires sont déterminés au moyen d'une méthodes des moindres carrés pondérés.

10. Procédé pour la calibration d'une antenne d'un récepteur selon la revendication 8, dans lequel, les coordonnés définissant l'attitude de l'antenne étant un cap ($\psi$), une assiette ($\theta$) et une inclinaison ($\varphi$), le calcul de l'indicateur de vraisemblance ($\Phi$) suit la relation suivante :

$$\Phi(\psi,\theta,\varphi) = \sum_{m=2}^{M} \left\| W^{1/2}(H_m \hat{X}_m - Z_m) \right\|^2 = \sum_{m=2}^{M}(H_m \hat{X}_m - Z_m)^T W(H_m \hat{X}_m - Z_m)$$

Avec $\Phi(\psi,\theta,\varphi)$ l'indicateur de vraisemblance pour le cap $\psi$, l'assiette $\theta$ et l'inclinaison $\varphi$ et W une matrice de pondération diagonale, H une matrice des fonctions des directions d'arrivée des signaux en repère antenne, X une matrice de coefficients et Z étant défini comme suit :

$$Z_m = \begin{bmatrix} d_{m,1\ mesuré} - d_{m,1\ théorique}(\psi,\theta,\varphi) \\ \vdots \\ d_{m,n\ mesuré} - d_{m,n\ théorique}(\psi,\theta,\varphi) \\ \vdots \\ d_{m,N\ mesuré} - d_{m,N\ théorique}(\psi,\theta,\varphi) \end{bmatrix}_{Nx1}.$$

11. Procédé pour la calibration d'une antenne d'un récepteur selon l'une des revendications 1 à 10, dans lequel, les étapes de détermination d'une hypothèse d'attitude de l'antenne et de calcul de biais sont réalisées façon itérative et comprennent des étapes de :

- initialisation (501) d'une hypothèse dite précédente $(\psi_{n-1},\theta_{n-1},\varphi_{n-1})$, $\varphi_{n-1}$),
- calcul (502) d'une hypothèse courante $((\psi_n,\theta_n,\varphi_n)$ à partir de l'hypothèse précédente $(\psi_{n-1},\theta_{n-1},\varphi_{n-1})$,
- calcul des sommes des résidus au carré (503) à partir de l'hypothèse courante $(\psi_n,\theta_n,\varphi_n)$
- calcul (504) d'un gradient à partir des sommes des résidus au carré,
- comparaison (505) du gradient avec un seuil prédéterminé (S), si le gradient est inférieur au seuil (S) alors la calibration est terminé (506), sinon le retour à l'étape de calcul (502) d'une hypothèse courante avec l'hypothèse courante comme hypothèse précédente.

12. Procédé pour la calibration d'une antenne d'un récepteur selon la revendication 11, dans lequel, le calcul (502) d'une hypothèse courante à partir d'une hypothèse précédente suit la relation suivante :

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \Phi(\psi_n,\theta_n,\varphi_n).\frac{\vec{Grad}\Phi(\psi_n,\theta_n,\varphi_n)}{\left\| \vec{Grad}\Phi(\psi_n,\theta_n,\varphi_n) \right\|^2}$$

Avec

$$\vec{Grad}\,\Phi(\psi,\theta,\varphi) \stackrel{def}{=} \begin{bmatrix} \dfrac{\partial\Phi}{\partial\psi}(\psi,\theta,\varphi) \\[2mm] \dfrac{\partial\Phi}{\partial\theta}(\psi,\theta,\varphi) \\[2mm] \dfrac{\partial\Phi}{\partial\varphi}(\psi,\theta,\varphi) \end{bmatrix}$$

Avec $\vec{Grad}\,\Phi$ le gradient de l'indicateur de vraisemblance fonction de $\psi$ le cap, $\theta$ l'assiette et $\varphi$ l'inclinaison.

**13.** Procédé pour la calibration d'une antenne d'un récepteur selon la revendication 11, dans lequel, le calcul d'une hypothèse courante à partir d'une hypothèse précédente suit la relation suivante :

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \alpha\,.\,\vec{Grad}\,\Phi(\psi_n,\theta_n,\varphi_n)$$

Avec $\vec{Grad}\,\Phi$ le gradient de l'indicateur de vraisemblance fonction de $\psi$ le cap, $\theta$ l'assiette et $\varphi$ l'inclinaison et $\alpha$ un coefficient de recalage.

**14.** Récepteur de signaux sources comportant une pluralité de capteurs répartis sur une antenne, des moyens pour numériser les signaux provenant desdits capteurs, un dispositif de traitement du signal (701) adaptés pour le traitement du signal comportant :

- un premier module (601) adapté au calcul de signaux corrélés ($Z_1$ , ..., $Z_M$) à partir des signaux reçus par les capteurs ($c_1$ , ... , $c_M$) et correspondant à ladite source ($s_n$), lesdits signaux corrélés ($Z_1$ , ..., $Z_M$), résultant de la corrélation des signaux reçus respectivement sur les capteurs ($c_1$ , ... , $c_M$) par un signal local constitué par une porteuse complexe et un code d'étalement propre à la source ($S_n$) correspondante,
- un deuxième module (602) adapté à la détermination des mesures de déphasage ($d_{m,n\ mesuré}$) pour chacun des capteurs ($c_1$ , ..., $c_M$) sur le signal provenant de ladite source ($s_n$), à partir des signaux corrélés ($Z_1$ , ..., $Z_M$).

ledit récepteur comporte également des moyens de mise en oeuvre du procédé (702) selon l'une des revendications 1 à 13.

**Patentansprüche**

**1.** Verfahren zur Eichung einer Antenne eines Empfängers von Signalen ($s_1$ , ..., $s_N$), die aus einer Vielzahl von Quellen stammen, wobei der Empfänger eine Vielzahl von Sensoren ($c_1$,..., $c_M$) umfasst, **dadurch gekennzeichnet, dass** es die folgenden Schritte umfasst:

- die Messung (401) einer Phasenverschiebung ($d_{m,n\ gemessen}$) für jeden der Sensoren ($c_1$,..., $c_M$) über jedes der Signale ($s_1$, ..., $s_N$),
- die Bestimmung (402) von mindestens einem Lagewert der Antenne, wobei die Lage durch einen Koordinatensatz definiert wird, anhand einer Bestimmung einer Vielzahl von Lagehypothesen der Antenne, und für jede bestimmte Lagehypothese:

  ∘ die Berechnung (404) einer Messabweichung ($\beta_{1\ Sensor\ m}$) für jeden der Sensoren anhand der gemessenen Phasenverschiebungen ($d_{m,n\ gemessen}$) und der Soll-Phasenverschiebungen ($d_{m,n\ Soll}$) des Sensors,
  ∘ die Berechnung (405) eines Plausibilitätsindikators ($\Phi$) der Lagehypothese anhand der gemessenen Phasenverschiebungen ($d_{m,n\ gemessen}$), der Soll-Phasenverschiebungen ($d_{m,n\ Soll}$) und der berechneten Messabweichungen ($\beta_{1\ Sensor\ m}$)

- die Berechnung (403), für jeden der Sensoren über jedes der Signale, einer Soll-Phasenverschiebung ($d_{m,n\ Soll}$)

in Abhängigkeit von der Lage der Antenne anhand der Ankunftsrichtungen der Signale,
- die Berechnung (404) einer Messabweichung ($\beta_{1\ Sensor\ m}$) für jeden der Sensoren anhand der gemessenen Phasenverschiebungen ($d_{m,n\ gemessen}$) und der Soll-Phasenverschiebungen ($d_{m,n\ Soll}$) des Sensors, und
- die Auswahl (406) der Messabweichungen, für die der Wert des Plausibilitätsindikators am niedrigsten ist.

2. Verfahren zur Eichung einer Antenne eines Empfängers nach Anspruch 1, wobei der Bestimmungsschritt (402) von mindestens einem Lagewert der Antenne die Bestimmung eines einzigen Werts umfasst, der durch angepasste Messmittel bestimmt wird.

3. Verfahren nach Anspruch 2, wobei die Berechnung (404) einer Messabweichung ($\beta_{1\ Sensor\ m}$) für jeden der Sensoren anhand der gemessenen Phasenverschiebungen ($d_{m,n\ gemessen}$) und der Soll-Phasenverschiebungen ($d_{m,n\ Soll}$) des Sensors unter Einhaltung eines Verfahrens von kleinsten Quadraten durchgeführt wird.

4. Verfahren zur Eichung einer Antenne eines Empfängers nach Anspruch 3, wobei die Berechnung (403), für jeden der Sensoren über jedes der Signale, einer Soll-Phasenverschiebung ($d_{m,n\ Soll}$) auch vorbestimmte Werte von Sensor-Messabweichungen ($\beta_{0\ Sensor\ m}$) in Verbindung mit Defekten des Empfängers und abhängig von der Ankunftsrichtung der Quellsignale berücksichtigt, wobei die Eichung darauf abzielt, residuale Sensor-Messabweichungen ($\beta_{1\ Sensor\ m}$) unabhängig von der Ankunftsrichtung der Signale zu identifizieren.

5. Verfahren zur Eichung einer Antenne eines Empfängers nach Anspruch 4, wobei die Koordinaten, die die Lage der Antenne definieren, ein Kurs ($\Psi$), eine Trimmlage ($\theta$) und eine Schräglage ($\varphi$) sind, die Berechnung des Plausibilitätsindikators ($\Phi$) die Berechnung eines Rests für jedes Paar Signal/Sensor umfasst, wobei der Rest für einen gegebenen Sensor und ein gegebenes Signal dem folgenden Verhältnis folgt:

$$\rho_{m,n}(\Psi,\theta,\varphi)d_{m,n\ gemessen} - d_{m,n\ Soll}(\Psi,\theta,\varphi) - \tilde{\beta}_{1\ Sensor\ m}(\Psi,\theta,\varphi)$$

wobei $\rho_{m,n}(\Psi,\theta,\varphi)$ der assoziierte Rest mit dem Paar Signal n und Sensor m ist, $d_{m,n\ gemessen}$ die gemessene Phasenverschiebung für den Sensor m für das Signal n ist, $d_{m,n\ Soll}(\Psi,\theta,\varphi)$ die Soll-Phasenverschiebung für den Sensor m für das Signal n und für den Kurs $\Psi$, die Trimmlage $\theta$ und die Schräglage $\varphi$, $\tilde{\beta}_{1\ Sensor\ m}(\Psi,\theta,\varphi)$ ein geschätzter Wert der Messabweichung des Sensors m für den Kurs $\Psi$, die Trimmlage $\theta$ und die Schräglage $\varphi$ ist. und wobei der Plausibilitätsindikator eine gewichtete Summe der Quadrate der Reste gemäß dem folgenden Verhältnis ist:

$$\Phi(\psi,\theta,\varphi) = \sum_{m=2}^{M}\sum_{n=1}^{N} w(\sigma_n,\alpha_n)\cdot\left|\rho_{m,n}(\psi,\theta,\varphi)\right|^2$$

wobei $\Phi(\Psi,\theta,\varphi)$ der Plausibilitätsindikator für den Kurs $\Psi$, die Trimmlage $\theta$ und die Schräglage $\varphi$ ist, $\rho_{m,n}(\Psi,\theta,\varphi)$ der assoziierte Rest mit dem Paar Signal n und Sensor m und $w(\sigma_n,\alpha_n)$ eine Gewichtung der Quelle n, abhängig von $\sigma_n$ dem Ortswinkel an Sensorposition und von $\alpha_n$ dem Azimutwinkel an Sensorposition ist.

6. Verfahren zur Eichung einer Antenne eines Empfängers nach einem der Ansprüche 1 bis 5, wobei die Berechnung (404) einer Messabweichung $\beta_{1\ Sensor\ m}$ für jeden der Sensoren anhand der gemessenen Phasenverschiebungen ($d_{m,n\ gemessen}$) und der Soll-Phasenverschiebungen ($d_{m,n\ Soll}$) des Sensors gemäß einem Verfahren gewichteter kleinster Quadrate durchgeführt wird.

7. Verfahren zur Eichung einer Antenne eines Empfängers nach Anspruch 5, wobei die Messabweichung der Sensoren unabhängig von der Ankunftsrichtung der Signale ist, die Berechnung (404) einer Messabweichung $\beta_{1\ Sensor\ m}$ für jeden der Sensoren anhand der gemessenen Phasenverschiebungen ($d_{m,n\ gemessen}$) und der Soll-Phasenverschiebungen ($d_{m,n\ Soll}$) des Sensors gemäß einem gewichteten Mittel durchgeführt wird.

$$\tilde{\beta}_{1\ Sensor\ m}(\Psi,\theta,\varphi) = \frac{1}{N}\sum_{n=1}^{N} w(\sigma_n,\alpha_n)\cdot(d_{m,n\ gemessen} - d_{m,n\ Soll}(\Psi,\theta,\varphi))$$

wobei $\tilde{\beta}_{1\,Sensor\,m}(\Psi,\theta,\varphi)$ die Messabweichung eines Sensors m für den Kurs $\Psi$, die Trimmlage $\theta$ und die Schräglage $\varphi$ ist und $w(\sigma_n,\,\alpha_n)$ eine Gewichtung der Quelle n, abhängig von $\sigma_n$ dem Ortswinkel an Sensorposition und von $\alpha_n$ dem Azimutwinkel an Sensorposition.

8. Verfahren zur Eichung einer Antenne eines Empfängers nach Anspruch 1, wobei die Eichung darauf abzielt, residuale Messabweichungen ($\beta_{1\,Sensor\,m}$) zu identifizieren, die von der Ankunftsrichtung der Signale abhängen, wobei die Messabweichungen der Sensoren durch lineare Kombinationen ausgedrückt werden, umfassend Koeffizienten von Funktionen von Ankunftsrichtungen der Signale an Antennenposition.

9. Verfahren zur Eichung einer Antenne eines Empfängers nach Anspruch 8, wobei die Koeffizienten der linearen Kombinationen mittels eines Verfahrens von gewichteten kleinsten Quadraten bestimmt werden.

10. Verfahren zur Eichung einer Antenne eines Empfängers nach Anspruch 8, wobei die Koordinaten, die die Lage der Antenne definieren, ein Kurs ($\Psi$), eine Trimmlage ($\theta$) und eine Schräglage ($\varphi$) sind, die Berechnung des Plausibilitätsindikators ($\Phi$) dem folgenden Verhältnis folgt:

$$\Phi(\psi,\theta,\varphi) = \sum_{m=2}^{M} \left\| W^{1/2}(H_m\hat{X}_m - Z_m) \right\|^2 = \sum_{m=2}^{M}(H_m\hat{X}_m - Z_m)^T W (H_m\hat{X}_m - Z_m)$$

wobei $\Phi(\Psi,\theta,\varphi)$ der Plausibilitätsindikator für den Kurs $\Psi$, die Trimmlage $\theta$ und die Schräglage $\varphi$ ist und W eine diagonale Gewichtungsmatrix, H eine Matrix von Funktionen der Ankunftsrichtungen der Signale an Antennenposition, X eine Matrix von Koeffizienten und Z wie folgt definiert ist:

$$Z_m = \begin{bmatrix} d_{m,1\,gemessen} - d_{m,1\,Soll}(\Psi,\theta,\varphi) \\ d_{m,n\,gemessen} - d_{m,n\,Soll}(\Psi,\theta,\varphi) \\ d_{m,N\,gemessen} - d_{m,N\,Soll}(\Psi,\theta,\varphi) \end{bmatrix}_{Nx1}$$

11. Verfahren zur Eichung einer Antenne eines Empfängers nach einem der Ansprüche 1 bis 10, wobei die Schritte zur Bestimmung einer Lagehypothese der Antenne und zur Berechnung von Messabweichungen auf eine wiederholte Weise ausgeführt werden und die folgenden Schritte umfassen:

- Initialisierung (501) einer Hypothese, die als vorherig bezeichnet wird ($\Psi_{n-1},\theta_{n-1},\varphi_{n-1}$),
- Berechnung (502) einer aktuellen Hypothese ($\Psi_n,\theta_n,\varphi_n$) anhand der vorherigen Hypothese ($\Psi_{n-1},\theta_{n-1},\varphi_{n-1}$),
- Berechnung (503) der Summen der Reste im Quadrat anhand der aktuellen Hypothese ($\Psi_n,\theta_n,\varphi_n$),
- Berechnung (504) eines Gradienten anhand der Summen der Reste im Quadrat,
- Vergleich (505) des Gradienten mit einem vorbestimmten Schwellenwert (S), wenn der Gradient niedriger als der Schwellenwert (S) ist, dann wird die Eichung beendet (506), sonst die Rückkehr zum Berechnungsschritt (502) einer aktuellen Hypothese mit der aktuellen Hypothese als vorherige Hypothese.

12. Verfahren zur Eichung einer Antenne eines Empfängers nach Anspruch 11, wobei die Berechnung (502) einer aktuellen Hypothese anhand einer vorherigen Hypothese dem folgenden Verhältnis folgt:

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \Phi(\psi_n,\theta_n,\varphi_n) \cdot \frac{\vec{Grad}\Phi(\psi_n,\theta_n,\varphi_n)}{\left\| \vec{Grad}\Phi(\psi_n,\theta_n,\varphi_n) \right\|^2}$$

wobei

$$\vec{Grad}\,\Phi(\psi,\theta,\varphi) \overset{def}{=} \begin{bmatrix} \dfrac{\partial \Phi}{\partial \psi}(\psi,\theta,\varphi) \\[2mm] \dfrac{\partial \Phi}{\partial \theta}(\psi,\theta,\varphi) \\[2mm] \dfrac{\partial \Phi}{\partial \varphi}(\psi,\theta,\varphi) \end{bmatrix}$$

wobei $\vec{Grad}\,\Phi$ der Gradient des Plausibilitätsindikators ist, abhängig von $\Psi$ dem Kurs, $\theta$ der Trimmlage und $\varphi$ der Schräglage.

13. Verfahren zur Eichung einer Antenne eines Empfängers nach Anspruch 11, wobei die Berechnung einer aktuellen Hypothese anhand einer vorherigen Hypothese dem folgenden Verhältnis folgt:

$$\begin{bmatrix} \psi_{n+1} \\ \theta_{n+1} \\ \varphi_{n+1} \end{bmatrix} = \begin{bmatrix} \psi_{n} \\ \theta_{n} \\ \varphi_{n} \end{bmatrix} - \alpha \,.\, \vec{Grad}\,\Phi(\psi_{n},\theta_{n},\varphi_{n})$$

wobei $\vec{Grad}\,\Phi$ der Gradient des Plausibilitätsindikators ist, abhängig von $\Psi$ dem Kurs, $\theta$ der Trimmlage und $\varphi$ der Schräglage, und $\alpha$ ein Korrekturkoeffizient.

14. Empfänger von Quellsignalen, umfassend eine Vielzahl von Sensoren, die auf einer Antenne verteilt sind, Mittel zum Digitalisieren der Signale, die von den Sensoren stammen, eine Behandlungsvorrichtung des Signals (701), die zur Behandlung des Signals angepasst ist, umfassend:

- ein erstes Modul (601), das an die Berechnung von korrelierten Signalen ($Z_1$, ..., $Z_M$) anhand der empfangenen Signale durch die Sensoren ($c_1$,... , $c_M$) und entsprechend der Quelle ($s_n$) angepasst ist, wobei die korrelierten Signale ($Z_1$, ..., $Z_M$) aus der Korrelation von jeweils empfangenen Signalen an den Sensoren ($c_1$,... , $c_M$) durch ein lokales Signal, gebildet durch einen komplexen Träger und einen Verteilungscode, der der entsprechenden Quelle ($S_n$) eigen ist, resultieren,
- ein zweites Modul (602), das an die Bestimmung von Phasenverschiebungsmaßen ($d_{m,n\ gemessen}$) für jeden der Sensoren ($c_1$, ..., $c_M$) über das Signal angepasst ist, das von der Quelle ($s_n$) stammt, anhand der korrelierten Signale ($Z_1$, ..., $Z_M$), wobei der Empfänger auch Mittel zum Umsetzen des Verfahrens (702) nach einem der Ansprüche 1 bis 13 umfasst.

**Claims**

1. Method for calibrating an antenna of a receiver of signals ($s_1$, ..., $s_N$) originating from a plurality of sources, said receiver comprising a plurality of sensors ($c_1$,... $c_M$), **characterised in that** it comprises the following steps:

   - the measurement (401) of a phase shift ($d_{m,n\ mesuré}$) for each of the sensors ($c_1$,... $c_M$) on each of the signals ($s_1$, ..., $s_N$),
   - the determination (402) of at least one attitude value of the antenna, said attitude being defined by a set of coordinates, from a determination of a plurality of antenna attitude hypotheses, and for each determined attitude hypothesis:

     ◦ the calculation (404) of a bias ($\beta_{1\ capteur\ m}$) for each of the sensors from the measured phase shifts ($d_{m,n\ mesuré}$) and from the theoretical phase shifts ($d_{m,n\ théorique}$) of the sensor,
     ◦ the calculation (405) of a likelihood indicator ($\Phi$) of the attitude hypothesis, from the measured phase shifts ($d_{m,n\ mesuré}$), from the theoretical phase shifts ($d_{m,n\ theorique}$) and from the calculated biases ($\beta_{1\ capteur\ m}$),

   - the calculation (403), for each of the sensors on each of the signals, of a theoretical phase shift ($d_{m,n\ théorique}$)

as a function of the attitude of the antenna, from the directions of arrival of the signals,
- the calculation (404) of a bias ($\beta_{1\,capteur\,m}$) for each of the sensors from the measured phase shifts ($d_{m,n\,mesuré}$) and from the theoretical phase shifts ($d_{m,n\,théorique}$) of the sensor, and
- the selection (406) of the biases for which the value of the likelihood indicator is the lowest.

2. Method for calibrating an antenna of a receiver according to claim 1, wherein the step of determination (402) of at least one attitude value of the antenna comprises the determination of a single value determined by suitable measurement means.

3. Method according to claim 2, wherein the calculation (404) of a bias ($\beta_{1\,capteur\,m}$) for each of the sensors from the measured phase shifts ($d_{m,n\,mesuré}$) and from the theoretical phase shifts ($d_{m,n\,théorique}$) of the sensor is performed using a least squares method.

4. Method for calibrating an antenna of a receiver according to claim 3, wherein the calculation (403), for each of the sensors on each of the signals, of a theoretical phase shift ($d_{m,n\,theorique}$) also takes into account predetermined values of the sensor biases ($\beta_{0\,capteur\,m}$) linked to receiver defects and dependent on the direction of arrival of the source signals, the purpose of the calibration being to identify residual sensor biases ($\beta_{1\,capteur\,m}$) independent of the direction of arrival of the signals.

5. Method for calibrating an antenna of a receiver according to claim 4, wherein, the coordinates defining the attitude of the antenna being a heading ($\psi$), a trim ($\theta$) and an inclination ($\varphi$), the calculation of the likelihood indicator ($\Phi$) comprises the calculation of a residue for each signal/sensor pair, the residue for a given sensor and signal according to the relationship:

$$\rho_{m,n}(\psi,\theta,\varphi) = d_{m,n\,mesuré} - d_{m,n\,théorique}\,(\psi,\theta,\varphi) - \tilde{\beta}_{1\,capteur\,m}\,(\psi,\theta,\varphi),$$

with $\rho_{m,n}(\psi,\theta,\varphi)$ being the residue associated with the pair comprising signal n and sensor m, $d_{m,n\,mesuré}$ being the measured phase shift for the sensor m for the signal n, $d_{m,n\,théorique}\,(\psi,\theta,\varphi)$ being the theoretical phase shift for the sensor m for the signal n and for the heading $\psi$, the trim $\theta$ and the inclination $\varphi$, $\tilde{\beta}_{1\,capteur\,m}\,(\psi,\theta,\varphi)$ being an estimated value of the bias of the sensor m for the heading $\psi$, the trim $\theta$ and the inclination $\varphi$,
and in that the likelihood indicator is a weighted sum of the squares of the residues according to the following relationship:

$$\Phi(\psi,\theta,\varphi) = \sum_{m=2}^{M}\sum_{n=1}^{N} w(\sigma_n,\alpha_n).\left|\rho_{m,n}(\psi,\theta,\varphi)\right|^{2}$$

with $\Phi(\psi,\theta,\varphi)$ being the likelihood indicator for the heading $\psi$, the trim $\theta$ and the inclination $\varphi$, $\rho_{m,n}(\psi,\theta,\varphi)$ being the residue associated with the pair comprising signal n and sensor m and $w(\sigma_n,\alpha_n)$ being a weighting of the source n, dependent on $\sigma_n$, the angle of elevation in the sensor reference system and on $\alpha_n$, the azimuth angle in the sensor reference system.

6. Method for calibrating an antenna of a receiver according to any one of claims 1 to 5, wherein the calculation (404) of a bias $\beta_{1\,capteur\,m}$ for each of the sensors from the measured phase shifts ($d_{m,n\,mesuré}$) and from the theoretical phase shifts ($d_{m,n\,theorique}$) of the sensor is performed using a weighted least squares method.

7. Method for calibrating an antenna of a receiver according to claim 5, wherein, the bias of the sensors being independent of the direction of arrival of the signals, the calculation (404) of a bias ($\beta_{1,\,capteur\,m}$) for each of the sensors from the measured phase shifts ($d_{m,n\,mesuré}$) and from the theoretical phase shifts ($d_{m,n\,theorique}$) of the sensor is performed according to a weighted average,

$$\tilde{\beta}_{1\,capteur\,m}(\psi,\theta,\varphi) = \frac{1}{N}\sum_{n=1}^{N} w(\sigma_n,\alpha_n).\left(d_{m,n\,mesuré} - d_{m,n\,théorique}(\psi,\theta,\varphi)\right)$$

with $\tilde{\beta}_{1\,capteur\,m}\,(\psi,\theta,\varphi)$ being the bias of a sensor m, for the heading $\psi$, the trim $\theta$ and the inclination $\varphi$ and $w(\sigma_n,$

$\alpha_n$) being a weighting of the source n, dependent on $\sigma_n$, the angle of elevation in the sensor reference system and on $\alpha_n$, the azimuth angle in the sensor reference system.

8.  Method for calibrating an antenna of a receiver according to claim 1, wherein, the purpose of the calibration being to identify residual biases ($\beta_{1\,capteur\,m}$) dependent on the direction of arrival of the signals, the biases of the sensors are expressed by linear combinations, comprising coefficients of functions of the directions of arrival of the signals in the antenna reference system.

9.  Method for calibrating an antenna of a receiver according to claim 8, wherein the coefficients of the linear combinations are determined by means of a weighted least squares method.

10. Method for calibrating an antenna of a receiver according to claim 8, wherein, the coordinates defining the attitude of the antenna being a heading ($\psi$), a trim ($\theta$) and an inclination ($\varphi$), the calculation of the likelihood indicator ($\Phi$) follows the following relationship:

$$\Phi(\psi,\theta,\varphi) = \sum_{m=2}^{M} \left\| W^{1/2} (H_m \hat{X}_m - Z_m) \right\|^2 = \sum_{m=2}^{M} (H_m \hat{X}_m - Z_m)^T W (H_m \hat{X}_m - Z_m)$$

with $\Phi(\psi,\theta,\varphi)$ being the likelihood indicator for the heading $\varphi$, the trim $\theta$ and the inclination $\varphi$, and W being a diagonal weighting matrix, H being a matrix of the functions of the directions of arrival of the signals in the antenna reference system, X being a matrix of coefficients and Z being defined as follows:

$$Z_m = \begin{bmatrix} d_{m,1\,mesur\acute{e}} - d_{m,1\,th\acute{e}orique}(\psi,\theta,\varphi) \\ \vdots \\ d_{m,n\,mesur\acute{e}} - d_{m,n\,th\acute{e}orique}(\psi,\theta,\varphi) \\ \vdots \\ d_{m,N\,mesur\acute{e}} - d_{m,N\,th\acute{e}orique}(\psi,\theta,\varphi) \end{bmatrix}_{Nx1}.$$

11. Method for calibrating an antenna of a receiver according to any one of claims 1 to 10, wherein, the steps of determination of an antenna attitude hypothesis and of calculation of biases are performed iteratively and comprise steps of:

    - initialization (501) of a so-called preceding hypothesis ($\psi_{n-1},\theta_{n-1},\varphi_{n-1}$),
    - calculation (502) of a current hypothesis ($\psi_n,\theta_n,\varphi_n$) from the preceding hypothesis ($\psi_{n-1},\theta_{n-1},\varphi_{n-1}$),
    - calculation (503) of the sums of the residues squared from the current hypothesis ($\Psi_n,\theta_n,\varphi_n$),
    - calculation (504) of a gradient from the sums of the residues squared,
    - comparison (505) of the gradient with a predetermined threshold (S), if the gradient is below the threshold (S) then the calibration is finished (506), otherwise return to the step of calculation (502) of a current hypothesis with the current hypothesis as the preceding hypothesis.

12. Method for calibrating an antenna of a receiver according to claim 11, wherein the calculation (502) of a current hypothesis from a preceding hypothesis follows the following relationship:

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \Phi(\psi_n,\theta_n,\varphi_n).\frac{\vec{Grad}\Phi(\psi_n,\theta_n,\varphi_n)}{\left\| \vec{Grad}\Phi(\psi_n,\theta_n,\varphi_n) \right\|^2}$$

with

$$\vec{Grad}\Phi(\psi,\theta,\varphi) \overset{def}{=} \begin{bmatrix} \dfrac{\partial \Phi}{\partial \psi}(\psi,\theta,\varphi) \\ \dfrac{\partial \Phi}{\partial \theta}(\psi,\theta,\varphi) \\ \dfrac{\partial \Phi}{\partial \varphi}(\psi,\theta,\varphi) \end{bmatrix}$$

with $\vec{Grad}\Phi$ being the gradient of the likelihood indicator that is a function of $\psi$ the heading, $\theta$ being the trim, and $\varphi$ being the inclination.

13. Method for calibrating an antenna of a receiver according to claim 11, wherein the calculation of a current hypothesis from a preceding hypothesis follows the following relationship:

$$\begin{bmatrix} \psi_{n+1} \\ \theta_{n+1} \\ \varphi_{n+1} \end{bmatrix} = \begin{bmatrix} \psi_n \\ \theta_n \\ \varphi_n \end{bmatrix} - \alpha . \vec{Grad}\Phi(\psi_n,\theta_n,\varphi_n)$$

with $\vec{Grad}\Phi$ being the gradient of the likelihood indicator that is a function of $\psi$ the heading, $\theta$ being the trim, and $\varphi$ being the inclination and $\alpha$ being an alignment coefficient.

14. Receiver of source signals comprising a plurality of sensors distributed over an antenna, means for digitising the signals originating from said sensors, a signal processing device (701) suitable for processing the signal comprising:

- a first module (601) suitable for calculating correlated signals ($Z_1$, ...., $Z_M$) from the signals received by the sensors ($c_1$,... $c_M$) and corresponding to said source ($s_n$), said correlated signals ($Z_1$, ...., $Z_M$), resulting from the correlation of the signals received respectively on the sensors ($c_1$,... $c_M$) by a local signal constituted by a complex carrier and a spreading code specific to the corresponding source ($s_n$),
- a second module (602) suitable for determining phase shift measurements ($d_{m,n\,mesuré}$) for each of the sensors ($c_1$,... $c_M$) on the signal originating from said source ($s_n$), from the correlated signals ($Z_1$, ...., $Z_M$),

said receiver also comprises means for carrying out the method (702) according to any one of claims 1 to 13.

FIG.1

FIG.2

FIG.3

401 — | Mesure de déphasages |

↓

402 — | Détermination d'hypothèses d'attitude |

↓

403 — | Calcul de déphasages théorique |

↓

404 — | Calcul des biais |

↓

405 — | Calcul d'indicateurs de vraisemblance |

↓

406 — | Sélection des biais |

# FIG.4

Initialisation : n = 0

$$\begin{bmatrix} \psi_0 \\ \theta_0 \\ \varphi_0 \end{bmatrix} = \begin{bmatrix} route \\ 0 \\ 0 \end{bmatrix} \qquad \vec{Grad}\Phi_0 = \begin{bmatrix} 0 \\ 0 \\ 0 \end{bmatrix}$$

— 501

$n = n+1$

Calcul de $(\psi_n, \theta_n, \varphi_n)$ :

$$\begin{bmatrix} \psi_n \\ \theta_n \\ \varphi_n \end{bmatrix} = \begin{bmatrix} \psi_{n-1} \\ \theta_{n-1} \\ \varphi_{n-1} \end{bmatrix} - \Phi(\psi_{n-1},\theta_{n-1},\varphi_{n-1}).\vec{Grad}\Phi_{n-1} / \left\| \vec{Grad}\Phi_{n-1} \right\|^2$$

— 502

Calcul des sommes des résidus au carré :

$$\Phi(\psi_n,\theta_n,\varphi_n)$$
$$\Phi(\psi_n + d\psi,\theta_n,\varphi_n)$$
$$\Phi(\psi_n,\theta_n + d\theta,\varphi_n)$$
$$\Phi(\psi_n,\theta_n,\varphi_n + d\varphi)$$

— 503

Calcul du Gradient :

$$\vec{Grad}\Phi_n = \begin{bmatrix} \dfrac{\Phi(\psi_n + d\psi,\theta_n,\varphi_n) - \Phi(\psi_n,\theta_n,\varphi_n)}{d\psi} \\ \dfrac{\Phi(\psi_n,\theta_n + d\theta,\varphi_n) - \Phi(\psi_n,\theta_n,\varphi_n)}{d\theta} \\ \dfrac{\Phi(\psi_n,\theta_n,\varphi_n + d\varphi) - \Phi(\psi_n,\theta_n,\varphi_n)}{d\varphi} \end{bmatrix}$$

— 504

Condition de convergence :
$$\left\| \vec{Grad}\Phi_n \right\| < S$$

— 505

NON

OUI

Résultat : $\hat{\beta}_{capteur\ m} = \beta_{capteur\ m}(\psi_n,\theta_n,\varphi_n)$

— 506

FIG.5

**FIG.6**

**FIG.7**

**EP 2 500 750 B1**

## RÉFÉRENCES CITÉES DANS LA DESCRIPTION

### Documents brevets cités dans la description

- US 5446465 A